(19) 

Europäisches
Patentamt

European
Patent Office

Office européen
des brevets

(11) **EP 4 347 675 B1**

(12) **EUROPEAN PATENT SPECIFICATION**

(45) Date of publication and mention
of the grant of the patent:
**15.01.2025  Bulletin 2025/03**

(51) International Patent Classification (IPC):
**C08F 265/04** (2006.01)    **C08L 25/12** (2006.01)
**C08L 51/04** (2006.01)    **C08F 220/18** (2006.01)

(21) Application number: **22730247.8**

(22) Date of filing: **24.05.2022**

(52) Cooperative Patent Classification (CPC):
(C-Sets available)
**C08F 220/1804; C08F 265/04; C08L 25/12**   (Cont.)

(86) International application number:
**PCT/EP2022/064015**

(87) International publication number:
**WO 2022/248452 (01.12.2022 Gazette 2022/48)**

(54) **ACRYLIC RUBBER FOR THERMOPLASTIC MATERIAL WITH GOOD LOW TEMPERATURE IMPACT STRENGTH**

ACRYLKAUTSCHUK FÜR THERMOPLASTISCHE KUNSTSTOFFE MIT GUTER TIEFTEMPERATURSCHLAGZÄHIGKEIT

CAOUTCHOUC ACRYLIQUE POUR UN MATÉRIAU THERMOPLASTIQUE PRÉSENTANT UNE BONNE RÉSISTANCE AU CHOC À BASSE TEMPÉRATURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **25.05.2021  EP 21175616**

(43) Date of publication of application:
**10.04.2024   Bulletin 2024/15**

(73) Proprietor: **INEOS Styrolution Group GmbH
60325 Frankfurt (DE)**

(72) Inventors:
• **KLAUCK, Felix
  28011 Madrid (ES)**
• **NIESSNER, Norbert
  67159 Friedelsheim (DE)**
• **MICHELS, Gisbert
  51375 Leverkusen (DE)**

(74) Representative: **Jacobi, Markus Alexander
  Patentanwälte
  Isenbruck Bösl Hörschler PartG mbB
  Eastsite One
  Seckenheimer Landstrasse 4
  68163 Mannheim (DE)**

(56) References cited:
**EP-A1- 3 406 641      WO-A2-2006/132796
US-B1- 6 486 234**

EP 4 347 675 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

    C-Sets
    **C08F 265/04, C08F 220/44, C08F 212/08;**
    **C08L 25/12, C08L 51/04;**

C08F 220/1804, C08F 220/1808, C08F 220/1811;
C08F 220/1804, C08F 220/1811;
C08F 220/1804, C08F 220/1812, C08F 220/1818,
C08F 220/1811;
C08F 220/1804, C08F 220/1818, C08F 220/1811

**Description**

The invention relates an acrylic rubber for thermoplastic materials and in particular to a graft copolymer as impact modifier for thermoplastic molding compositions, comprising a cross-linked (meth)acrylate graft base based on C1 to C4-alkyl(meth)acrylates and C9 to C22-alkyl(meth)acrylates. It also relates to the use as impact modifier for thermoplastic molding compositions. The invention further proposes thermoplastic molding compositions and shaped articles thereof, and their use, in particular for applications in the automotive and construction industry. Thermoplastic molding compositions comprising said graft copolymer and a further thermoplastic polymer have an improved impact strength, in particular at low temperatures.

The production of poly-(styrene-acrylonitrile) resins is well known and described e.g. in Kunststoff-Handbuch (Plastics Handbook, Vieweg-Daumiller, Vol. V Polystyrol, Polystyrene, Carl-Hanser-Verlag, Munich, 1969, p 124, lines 12 ff.) or in Ullmanns Encyclopedia of Industrial Chemisty, (Wiley 2011). Polyacrylate based graft rubber copolymers are known as impact modifiers for poly-(styrene-co-acrylonitrile) thermoplastic polymers.

WO 2006/132796 reveals an impact modified engineering plastic comprising a polymer selected from polybutylene- or polyethylene-terephthalate and a cross-linked core/shell impact modifier comprising an elastomeric core polymer of 2-ethyl hexyl acrylate and n-octyl acrylate and a shell polymer comprising methyl methacrylate monomer units.

KR 20120054163A describes an impact modified composition with good impact strength at low temperatures comprising a multistage graft copolymer of the core-shell structure comprising - partly cross-linked - C1-C10-alkyl acrylate monomer units in the core polymer and a shell comprising a C1-C4-alkyl methacrylate (co)polymer. The core is e.g. composed of C2 to C8-alkyl acrylates, preferably butyl acrylate, 2-ethyl hexyl acrylate or ethyl acrylate, or, butyl acrylate and 2-ethyl hexyl acrylate. The resin composition comprises the impact modifier and a thermoplastic resin, such as e.g. polycarbonate, polycarbonate/polybutylene terephthalate (PC/PBT), polyvinyl chloride resin and PMMA.

KR20130078379A and KR20130078199A teach the use of an acrylonitrile-styrene-acrylate (ASA) graft copolymer having a core-shell structure for thermoplastic molding compositions based on SAN-copolymers. The cross-liked core is composed of C2 to C8-alkyl (meth-)acrylate rubbers, preferably n-butyl acrylate and n-butyl methacrylate.

WO 2012/038441 describes a cross-linked core/shell structured impact modifier which core comprises 2-octylacrylate (2-OA) copolymerized with another (meth)acrylate monomer, i.a. n-butyl acrylate (BA), 2-ethyl hexyl acrylate (EHA), n-octyl acrylate, n-dodecyl acrylate, propylheptyl acrylate (PHA). The shell polymer is based on methylmethacrylate. Exemplified are cross-linked core/shell polymers (core/shell ratio: 80/20) wherein the core is a BA-, EHA-, PHA-homopolymer or a copolymer of 2-OA and BA. The impact modifier is used for molding compositions based on polylactic acid, yielding transparent resin compositions.

DE 40 05 210 describes a thermoplastic molding composition comprising: a crosslinked rubber graft base polymer A comprising C1-C8-alkyl acrylate monomer units; a graft shell polymer B comprising vinyl aromatic monomer units, polar ethylenically unsaturated monomer units and C7-C20-alkyl acrylate monomer units; and a copolymer C comprising vinyl aromatic monomer units and polar ethylenically unsaturated monomer units. In the examples a cross-linked butyl acrylate polymer was grafted with a monomer mixture of acrylonitrile, styrene and 2-ethylhexyl acrylate. The obtained graft copolymer was mixed with a styrene-acrylonitrile copolymer.

EP-A 0657480 and DE 43 42 048 reveal alkyl acrylate rubber graft copolymers - comprising a crosslinked polydimethylsiloxane based core, a crosslinked C1-C18-alkyl acrylate polymer (preferably a C2-C8-alkylacrylat polymer, example: BA) based first graft shell and a second graft shell comprising an acrylonitrile/styrene (SAN) copolymer - and their uses in thermoplastic molding compositions (e.g. with a SAN-copolymer). By inclusion of the crosslinked polydimethylsiloxane based core the low temperature impact strength is increased compared to a rubbery copolymer core containing solely alkyl acrylate monomers.

EP-A 0725091 describes a graft rubber copolymer wherein the graft base is composed of 2-ethylhexyl acrylate monomer units and conjugated diene monomer units, and, optionally C2 to C32-alkyl acrylate monomer units, preferably ethyl acrylate and tert.-, iso- and n-butyl acrylate, and further optionally polyfunctional crosslinking monomer units.

As C2 to C32-alkyl acrylate monomer preferably ethyl acrylate and tert.-, iso- and n-butyl acrylate is used. Exemplified is a graft base composed of 2-ethylhexyl acrylate, butadiene and n-butyl acrylate. The graft shell is preferably composed of a SAN-copolymer. The graft rubber copolymer is used as impact modifier for thermoplastic molding compositions preferably based on SAN-copolymers. The obtained thermoplastic molding compositions have an improved low temperature impact strength.

EP-A 3406641 discloses a graft copolymer (B-I) produced by grafting at least one vinyl monomer (b-I) selected from the group consisting of an aromatic vinyl, an alkyl (meth)acrylate, and a vinyl cyanide to a rubbery polymer mixture including a rubbery polymer (A-I) and a hydrophobic substance, the rubbery polymer (A-I) including an alkyl (meth)acrylate unit and a multifunctional monomer unit copolymerizable with the alkyl (meth)acrylate, the hydrophobic substance having a kinematic viscosity of 5 $mm^2/s$ or more at 40°C or a kinematic viscosity of 2 to 4 $mm^2/s$ at 100°C, a principal constituent of the hydrophobic substance being a hydrocarbon.

Despite these findings in the prior art, there is still high demand for the improvement of the low temperature impact strength of molding compositions comprising Acrylonitrile-Styrene-Acrylate (ASA) graft copolymers.

One objective of the invention is to provide ASA graft copolymers, especially for the use in a thermoplastic molding composition comprising styrene-acrylonitrile copolymers, accessing increased impact strength at low temperatures.

It was surprisingly found that the aforementioned properties of ASA can be accessed by applying a graft copolymer according to the claims.

Therefore, one object of the present invention is a graft copolymer B composed of:

B1: 55 to 65 wt.-%, related to the graft copolymer B, of at least one graft base B1, obtained by emulsion polymerization of:

b11: 80 to 98.9 wt.-%, preferably 90 to 98.5 wt.-%, more preferably 92 to 98 wt.- %, most preferred 94 to 97 wt.-%, related to the graft base B1, of at least one C1 to C4-alkyl acrylate, preferably C2 to C4-alkyl acrylate, more preferably ethyl acrylate, tert.-, iso- and n-butyl acrylate, in particular n-butyl acrylate, as monomer b11;

where monomer b11 can be replaced partially by less than 50 wt.-%, preferably 20 wt.-% or less, - related to the total of monomers b11- by at least one C5 to C8-alkyl acrylate, preferably 2-ethyl hexyl acrylate;

b12: 1 to 19.9 wt.-%, preferably 1.35 to 10 wt.-%, more preferably 1.8 to 8 wt.-%, most preferred 2.6 to 6 wt.-%, related to the graft base B1, of at least one C9 to C22-alkyl(meth)acrylate, preferably C10 to C18-alkyl(meth)acrylate, more preferably C10 to C16-alkyl(meth)acrylate, most preferably C10 to C14-alkyl(meth)acrylate, in particular 2-propylheptyl acrylate, dodecyl acrylate and/or tetradecyl acrylate, as monomer b12; and

b13: 0.1 to 10 wt.-%, preferably 0.15 to 5 wt.-%, more preferably 0.20 to 3.5 wt.-%, most preferred 0.4 to 2.5 wt.-%, related to the graft base B1, of at least one bi- or polyfunctional crosslinking monomer b13, preferred selected from allyl(meth)acrylate, divinylbenzene, diallylmaleate, diallylfumarate, diallylphthalate, triallylcyanurat, triallylisocyanurat and dihydrodicyclopentadienyl acrylate (DCPA); where the sum of b11, b12 and b13 adds up to 100 wt.-%;

B2: 35 to 45 wt.-%, related to the graft copolymer B, of at least one graft shell B2, which - in the presence of at least one graft base B1 - is obtained in one or more steps via emulsion polymerization of:

b21: 50 to 95 wt.-%, preferred 60 to 90 wt.-%, more preferred 65 to 85 wt.-%, most preferred 70 to 85 wt.-%, related to the graft shell B2, of at least one vinylaromatic monomer b21, preferably styrene and alpha-methylstyrene, more preferably styrene; and
b22: 5 to 50 wt.-%, preferred 10 to 40 wt.-%, more preferred 15 to 35 wt.-%, most preferred 15 to 30 wt.-%, related to the graft shell B2, of at least one vinylcyan monomer b22, preferably acrylonitrile and methacrylonitrile, more preferably acrylonitrile;
where monomer b21 and/or monomer b22 can be replaced partially (less than 50 wt.-%, preferably 20 wt.-% or less, related to the total of monomers b21 and b22) by at least one C1 to C4-alkyl(meth)acrylate, in particular methyl methacrylate, maleic anhydride, N-phenyl maleimide, N-cyclohexyl maleimide and/or (meth)acrylamide; wherein the sum of b21 and b22 adds up to 100 wt.-%;

wherein the sum of B1 and B2 adds up to 100 wt.-%.

Wt.-% means percent by weight.

Graft Copolymer B

Preferably graft copolymer B according to the invention is composed of:

B1: 55 to 65 wt.-%, related to the graft copolymer B, of at least one graft base B1, obtained by emulsion polymerization of:

b11: 80 to 98.9 wt.-%, preferably 90 to 98.5 wt.-%, more preferably 92 to 98 wt.- %, most preferred 94 to 97 wt.-%, related to the graft base B1, of at least one C1 to C4-alkyl acrylate, preferably C2 to C4-alkyl acrylate, more preferably ethyl acrylate, tert.-, iso- and n-butyl acrylate, in particular n-butyl acrylate, as monomer b11, where monomer b11 can be replaced partially by less than 50 wt.-%, preferably 20 wt.-% or less, - related to the total of monomers b11 - by at least one C5 to C8-alkyl acrylate, preferably 2-ethyl hexyl acrylate;

b12: 1 to 19.9 wt.-%, preferably 1.35 to 10 wt.-%, more preferably 1.8 to 8 wt.-%, most preferred 2.6 to 6 wt.-%, related to the graft base B1, of at least one C9 to C22-alkyl(meth)acrylate, preferably C10 to C18-alkyl(meth) acrylate, more preferably C10 to C16-alkyl(meth)acrylate, most preferably C10 to C14-alkyl(meth)acrylate, in particular 2-propylheptyl acrylate, dodecyl acrylate and/or tetradecyl acrylate, as monomer b12; and

b13: 0.1 to 10 wt.-%, preferably 0.15 to 5 wt.-%, more preferably 0.20 to 3.5 wt.-%, most preferred 0.4 to 2.5 wt.-%, related to the graft base B1, of at least one bi- or polyfunctional crosslinking monomer b13, preferred selected from allyl(meth)acrylate, divinylbenzene, diallylmaleate, diallylfumarate, diallylphthalate, triallylcyanurat, triallylisocyanurat and dihydrodicyclopentadienyl acrylate (DCPA); where the sum of b11, b12 and b13 adds up to 100 wt.-%;

B2: 35 to 45 wt.-%, related to the graft copolymer B, of at least one graft shell B2, which - in the presence of at least one graft base B1 - is obtained in one or more steps via emulsion polymerization of:

b21: 50 to 95 wt.-%, preferred 60 to 90 wt.-%, more preferred 65 to 85 wt.-%, most preferred 70 to 85 wt.-%, related to the graft shell B2, of at least one vinylaromatic monomer b21, preferably styrene and alpha-methylstyrene, more preferably styrene; and

b22: 5 to 50 wt.-%, preferred 10 to 40 wt.-%, more preferred 15 to 35 wt.-%, most preferred 15 to 30 wt.-%, related to the graft shell B2, of at least one vinylcyan monomer b21, preferably acrylonitrile and methacrylonitrile, more preferably acrylonitrile;

where monomer b21 and/or monomer b22 can be replaced partially (less than 50 wt.-%, preferably 20 wt.-% or less, related to the total of monomers b21 and b22) by at least one C1 to C4-alkyl(meth)acrylate, in particular methyl methacrylate, maleic anhydride, N-phenyl maleimide, N-cyclohexyl maleimide and/or (meth)acrylamide; wherein the sum of b21 and b22 adds up to 100 wt.-%;

wherein the sum of B1 and B2 adds up to 100 wt.-%.

More preferably the graft copolymer B according to the invention is composed of:

B1: 55 to 65 wt.-%, related to the graft copolymer B, of at least one graft base B1, obtained by emulsion polymerization of:

b11: 90 to 98.5 wt.-%, preferably 92 to 98 wt.-%, more preferred 94 to 97 wt.-%, related to the graft base B1, of at least one C2 to C4-alkylacrylate, preferably ethylacrylate, tert.-, iso- and n-butyl acrylate, in particular n-butylacrylate, as monomer b11;

where monomer b11 can be replaced partially by less than 50 wt.-%, preferably 20 wt.-% or less - related to the total of monomers b11 - by at least one C5 to C8-alkyl acrylate, preferably 2-ethyl hexyl acrylate;

b12: 1.35 to 10 wt.-%, preferably 1.8 to 8 wt.-%, more preferred 2.6 to 6 wt.-%, related to the graft base B1, of at least one C9 to C22-alkylacrylate, preferably C10 to C18-alkylacrylate, more preferably C10 to C16-alkylacrylate, most preferably C10 to C14-alkylacrylate, in particular 2-propylheptyl acrylate, dodecyl acrylate and/or tetradecyl acrylate, as monomer b12; and

b13: 0.15 to 5 wt.-%, preferably 0.20 to 3.5 wt.-%, more preferred 0.4 to 2.5 wt.-%, related to the graft base B1, of at least one bi- or polyfunctional crosslinking monomer b13, preferred selected from allyl(meth)acrylate, divinylbenzene, diallylmaleate, diallylfumarate, diallylphthalate, triallylcyanurat, triallylisocyanurat and dihydrodicyclopentadienyl acrylate (DCPA);

where the sum of b11, b12 and b13 adds up to 100 wt.-%;

B2: 35 to 45 wt.-%, related to the graft copolymer B, of at least one graft shell B2, which - in the presence of at least one graft base B1 - is obtained in one or more steps via emulsion polymerization of:

b21: 50 to 95 wt.-%, preferred 60 to 90 wt.-%, more preferred 65 to 85 wt.-%, most preferred 70 to 85 wt.-%, related to the graft shell B2, of at least one vinylaromatic monomer b21, preferably styrene and alpha-methylstyrene, more preferably styrene, and

b22: 5 to 50 wt.-%, preferred 10 to 40 wt.-%, more preferred 15 to 35 wt.-%, most preferred 15 to 30 wt.-%, related to the graft shell B2, of at least one vinylcyan monomer b22, preferably acrylonitrile and methacrylonitrile, more preferably acrylonitrile,

where monomer b21 and/or monomer b22 can be replaced partially (less than 50 wt.-%, preferably 20 wt.-% or less, related to the total of monomers b21 and b22) by at least one C1 to C4-alkyl(meth)acrylate, in particular methyl methacrylate, maleic anhydride, N-phenyl maleimide, N-cyclohexyl maleimide and/or (meth)acrylamide; wherein the sum of b21 and b22 adds up to 100 wt.-%;

wherein the sum of B1 and B2 adds up to 100 wt.-%.

Often, or preferably, monomer b11 is not replaced by at least one C5 to C8-alkyl acrylate.

Often, or preferably, monomer b21 and/or monomer b22 is not replaced by at least one C1 to C4-alkyl(meth) acrylate, maleic anhydride, N-phenyl maleimide, N-cyclohexyl maleimide and/or (meth)acrylamide.

Graft Base B1

The graft base B1 generally has a glass transition temperature Tg below 0°C. The glass transition temperature Tg can be determined using the DSC according to DIN EN ISO 11358-1:2014 (heating rate 5 K/min).

Monomer b11 of the graft base B1 is generally at least one C1 to C4-alkyl acrylate, preferably at least one C2 to C4-alkyl acrylate.

At least one C1 to C4-alkyl acrylate means at least one acrylic acid ester of a C1-C4-alkylalcohol. The C1-C4-alkylalcohol of monomer b11 can be of linear or branched structure.

Particularly suitable as monomer b11 are ethyl acrylate, tert.-, iso- and/or n-butyl acrylate. Preference is given to n-butyl acrylate.

It is also possible to use a mixture of various C1-C4 alkyl acrylates differing in their alkyl residue. Preferably one C1 to C4-alkyl acrylate, more preferably one C2 to C4-alkyl acrylate, in particular n-butyl acrylate, is used.

The at least one C1 to C4-alkyl acrylate (= monomer b11) can be replaced partially (less than 50 wt.-%, preferably 20 wt.-% or less, related to the total of monomers b11) by at least one C5 to C8-alkyl acrylate, preferably 2-ethyl hexyl acrylate. The C5-C8-alkyl-alcohol of the C5 to C8-alkyl acrylate can be of linear or branched structure.

Monomer b12 of the graft base B1 is generally at least one C9 to C22-alkyl(meth)acrylate, preferably at least one C10 to C18-alkyl(meth)acrylate, more preferably at least one C10 to C16-alkyl(meth)acrylate, most preferably at least one C10 to C14-alkyl(meth)acrylate, in particular 2-propylheptyl acrylate, dodecyl acrylate and/or tetradecyl acrylate.

At least one C9 to C22-alkyl(meth)acrylate means at least one (meth)acrylic acid ester of an C9 to C22-alkyl alcohol (= an alkyl alcohol with 9 to 22 carbon atoms).

The C9 to C22-alkyl alcohol of monomer b12 can be of linear or branched structure.

Preferably monomer b12 is at least one C9 to C22-alkyl acrylate, preferably at least one C10 to C18-alkyl acrylate, more preferably at least one C10 to C16-alkyl acrylate, most preferably at least one C10 to C14-alkylacrylate.

Particularly suitable as monomer b12 is at least one monomer selected from 2-propylheptyl acrylate, iso-decyl acrylate, dodecyl acrylate, tetradecyl acrylate, hexadecyl acrylate and octadecyl acrylate (= stearyl acrylate). Preferably suitable as monomer b12 is at least one monomer selected from 2-propylheptyl acrylate, iso-decyl acrylate, dodecyl acrylate and tetradecyl acrylate, in particular 2-propylheptyl acrylate, dodecyl acrylate and/or tetradecyl acrylate.

The afore-mentioned monomers b12 can be used in mixture. Preferably one or two monomers b12 are used.

The rubbery graft base B1 moreover comprises at least one crosslinking monomer b13. Such monomers are bi- or polyfunctional comonomers having at least two olefinic double bonds, preferably bifunctional comonomers having two olefinic double bonds, examples being divinyl esters of dicarboxylic acids, for example of succinic acid and of adipic acid, diallyl- and divinyl ethers of bifunctional alcohols, for example of ethylene glycol and of butane-1,4-diol, diesters of acrylic acid and methacrylic acid with the bifunctional alcohols mentioned, 1,4-divinylbenzene, and triallyl cyanurate.

Particular preference is given to the acrylic ester of tricyclodecenyl alcohol (= tricyclodecenyl acrylate) which is known as dihydrodicyclopentadienyl acrylate (DCPA), and also to the allyl esters of acrylic and methacrylic acid, in particular allyl methacrylate (AMA). DCPA is most preferably used.

The crosslinking comonomer is generally used in amounts of from 0.1 to 10 wt.-%, preferably 0.5 to 5 wt.-%, more preferably 1 to 2.5 wt.-%, related to graft base B1. By way of example, from 1 to 2.5 wt.-%, preferably 1.5 to 2.1 wt.-% of DCPA or allyl methacrylate are used. It is possible to use two crosslinking agents, but preferable to use only one.

The mean particle diameter Dv (volume average) of the graft base B1 is in the range of from 50 to 700 nm, preferably 70 to 600 nm, more preferably 80 to 500 nm, most preferably 200 to 350 nm.

The mean particle diameter Dv can be measured by a laser diffraction apparatus. Polarized intensity difference scattering (PIDS) can be used to mask the water optical model. The particle size distribution can be calculated by software using the Mie scattering theory by assuming an appropriate refractive index (RI) value (1.47 for the graft base B1, 1.52 for the graft shell B2) and 1.33 for the measured medium (water).

Preferably, the swelling index of the graft base B1 is from 7 to 25, particularly preferably from 9 to 22. The swelling index is a measure of the ability of a solvent to swell a polymer. An example of a conventional swelling agent is methyl ethyl ketone or toluene. By way of example, the swelling index is determined by a method in which about 0.2 g of the solid in a graft base dispersion converted to a film via evaporation of the water is swollen in an amount of toluene, e.g. 50 g. The toluene is removed by suction after, for example, 24 hours, and the specimen is weighed. The specimen is weighed again after it has been dried in vacuo. The swelling index is the ratio of the weight after the swelling procedure to the dry weight after final drying.

Graft Shell B2

Vinylaromatic monomer b21 suitable for the production of the graft shell B2 is generally at least one monomer selected from the group consisting of: styrene, alpha-methylstyrene, p-methylstyrene, p-ethylstyrene and tert.-butylstyrene, more preferably styrene and alpha-methylstyrene, most preferably styrene.

The vinylcyan monomer b22 suitable for the production of the graft shell B2 is generally at least one monomer selected from the group consisting of: acrylonitrile, methacrylonitrile and ethacrylonitrile, preferably acrylonitrile and methacrylonitrile, more preferably acrylonitrile. Monomer b21 and/or monomer b22 can be replaced partially (less than 50 wt.-%, preferably 20 wt.-% or less, related to the total of monomers b21 and b22) by at least one C1 to C4-alkyl(meth) acrylates, in particular methyl methacrylate, maleic anhydride, N-phenyl maleimide, N-cyclohexyl maleimide and/or (meth)acrylamide.

Preferably monomer b21 and/or monomer b22 is not partially replaced by one of the afore-mentioned monomers.

Preference is given to a graft shell B2 which is obtained via emulsion polymerization of vinyl aromatic monomer b21 and vinyl cyan monomer b22, more preferably styrene and acrylonitrile. Said preferred graft shell B2 only comprises (or consists of) units derived from vinyl aromatic monomer b21 and vinyl cyan monomer b22, more preferably styrene and acrylonitrile.

The graft shell B2 may contain one or more, preferably two to three, more preferably two, graft shell layers B2-1, B2-2, B2-3, etc. with different graft monomer compositions but is not limited thereto.

Preferably graft shell B2 is composed of at least two graft layers B2-1 and B2-2 based on different graft monomer compositions. More preferably graft shell B2 is composed of two graft layers B2-1 (first layer) and B2-2 (second layer) with different graft monomer compositions.

Often, or most preferably, graft shell B2 is composed of two graft shell layers B2-1 and B2-2 wherein graft shell layer B2-1 is made from a vinylaromatic monomer b21-1, in particular styrene, and graft shell layer B2-2 is made from a mixture comprising (consisting of) vinylaromatic monomer b21-2, preferably styrene, and vinylcyan monomer b22-2, in particular acrylonitrile.

It is preferred that at least one of the graft shell layers is made from a mixture comprising (consisting of) vinylaromatic monomer b21, preferably styrene, and vinylcyan monomer b22, in particular acrylonitrile, wherein the amount of monomer b22 - related to the total of monomers b21 and b22 used for the graft shell layer- is 5 to 40 wt.-%, more preferably 15 to 35 wt.-%, most preferred 20 to 30 wt.-% of monomer b22, in particular acrylonitrile.

According to a preferred embodiment graft shell B2 is composed of two graft shell layers B2-1 and B2-2, wherein graft shell layer B2-1 is made from a vinylaromatic monomer b21-1, in particular styrene, and graft shell layer B2-2 is made from a mixture comprising (consisting of) vinylaromatic monomer b21-2, preferably styrene, and vinylcyan monomer b22-2, in particular acrylonitrile, wherein the amount of monomer b22-2 - related to the total of monomers b21-2 and b22-2 used for B2-2 - is 10 to 40 wt.-%, more preferably 15 to 35 wt.-%, most preferred 20 to 30 wt.-%.

Preferably the fraction of the first layer B2-1 - based on the total amount of B2 - is more than 5 wt.-%, preferably from 10 to 35 wt.-%.

The mean particle diameter Dv (volume average) of the graft copolymer B is in the range of from 60 to 800 nm, preferably 80 to 700 nm, more preferably 90 to 650 nm, most preferably 250 to 450 nm.

Process for the Preparation of the Graft Copolymer B

The graft copolymers B according to the invention are produced via aqueous free-radical emulsion polymerization optionally in the presence of a seed polymer latex (S-B1). The use and the preparation of a seed polymer latex by free-radical-initiated aqueous emulsion polymerization is known (cp. US 2,520,959).

The seed polymer latex (S-B1) is a starting rubber latex having a mean particle diameter Dv of below that of the final particles of the final graft base B1. The size of the particles of polymer may vary over a wide range. Often, the starting rubber latex has a mean particle diameter Dv of less than 120 nm, more often less than 100 nm, preferably less than 90 nm, more preferably in range of 50 to 85 nm, most preferred 60 to 85 nm.

EP 4 347 675 B1

The polymer used as "seed" need not to be identical in composition with the polymer present in the final rubber latex (graft base B1), but it should be selected from the same class of polymers. Preferably the starting rubber latex is a crosslinked acrylate rubber latex, more preferably a crosslinked butyl acrylate rubber latex.

The seed polymer latex (S-B1) is generally used in amounts of from 0.01 to 3.5 wt.-%, frequently from 0.03 to 3 wt.-%, and often from 0.04 to 2.5 wt.-%, based on the total amount of monomer used for the preparation of graft base B1. By use of such a seed polymer latex a controlled setting of the particle size of the polymer particles can be achieved.

The production of graft copolymers from an elastomeric ASA graft base and a graft shell is well known (see US 2011/0275763). Graft copolymers can be produced by grafting in a plurality of stages (see US 2011/0275763 and US 2016/0297957).

For the production process for the graft copolymers B the general procedure is that the graft base B1 is first produced in presence of optionally a seed polymer latex (S-B1) by emulsion polymerization, by polymerizing monomer b11, monomer b12 and monomer b13 in an aqueous emulsion with a free-radical initiator at temperatures of from 30° to 120°C, preferably from 40 to 100°C, more preferably 50 to 80 °C. In this resultant basic rubber latex (= graft base B1) then, in aqueous emulsion, in one or more steps (= reaction stages) the graft shell B2 is obtained by polymerization of at least one vinylaromatic monomer b21 and vinyl cyan monomer b22.

The materials can be introduced in form of a mixture, for example in the form of an aqueous monomer emulsion.

If in one step of the production process two or more monomers are added, the monomers can be added individually or in mixtures with one another. Preferably, the individual monomers are added simultaneously or in a mixture with one another.

To produce the graft polymer B it is preferable to use an inorganic peroxide salt, preferably inorganic persulfate salt, more preferably potassium peroxodisulfate, as free-radical initiator. It is also possible to use sodium peroxodisulfate and/or ammonium peroxodisulfate. It is also possible to use a redox initiator system, in particular comprising an organic peroxide and at least one reducing agent.

Suitable organic peroxides are those selected from the following group: di-tert-butyl peroxide, cumene hydroperoxide, tert-butyl hydroperoxide, and p-menthane hydroperoxide, and mixtures thereof. The reducing agent used generally comprises at least one water-soluble compound which has reducing action and has been selected from the following group: salts of sulfinic acid, salts of sulfurous acid, sodium dithionite, sodium sulfite, sodium hyposulfite, sodium hydrogensulfite, ascorbic acid, and salts thereof, Rongalit C (sodium formaldehyde-sulfoxylate), mono- and dihydroxyacetone, sugars, iron(II) salts, tin(II) salts, and titanium(III) salts.

The amount of the free-radical initiator used, based on the total amount of monomer, is generally from 0.01 to 5% by weight, preferably from 0.1 to 3% by weight, and particularly preferably from 0.2 to 1.5% by weight.

The graft polymer (B) can be produced by emulsion polymerization, with use of a redox initiator system comprising cumene hydroperoxide, dextrose, and iron(III) salt, or with use of a peroxide, such as potassium peroxodisulfate.

The graft base B1 is produced via free-radical-initiated aqueous emulsion polymerization as before described optionally in presence of a seed polymer latex (S-B1), by adding the monomers within the aqueous reaction medium after initiation of the free-radical polymerization reaction. In another possible method, at least one portion of the free-radical polymerization initiator and optionally of other auxiliaries is used as initial charge in the aqueous reaction medium, the resultant aqueous reaction medium is brought to polymerization temperature, and, at that temperature, the monomers are added to the aqueous reaction medium.

In one preferred embodiment of the invention, a peroxodisulfate, in particular potassium peroxodisulfate, is used as free-radical initiator, in conjunction with other auxiliary components, when producing the graft base B1. It is possible inter alia to use a buffer (such as bicarbonate), and potassium stearate. Preferably an alkyl sulfonate sodium salt (commercially available as Mersolat® H95 or K30 from Lanxess) is used as soap (emulsifier).

By way of example, tert-dodecyl mercaptan can be used as molecular-weight regulator, and can be added continuously or else at various junctures during the process to produce the rubber latex. The manner of addition of the regulator can have an effect on the properties of the final product. One preferred embodiment uses no regulator.

For the purposes of the polymerization process described, dispersing agents are also used, and these maintain dispersion not only of the monomer droplets but also of the polymer particles formed, within the aqueous medium, and thus ensure that the resultant aqueous polymer dispersion is stable. Dispersing agents that can be used are not only the protective colloids conventionally used in carrying out free-radical aqueous emulsion polymerizations but also commercially available emulsifiers. Examples of suitable protective colloids are polyvinyl alcohols, polyalkylene glycols, alkali metal salts of polyacrylic acids and polymethacrylic acids, and gelatin derivatives. Examples of suitable protective colloids are copolymers comprising the following: acrylic acid, methacrylic acid, maleic anhydride, 2-acrylamido-2-methylpropanesulfonic acid, and/or 4-styrenesulfonic acid, and alkali metal salts of those copolymers.

Other suitable protective colloids are homo- and copolymers comprising the following: N-vinylpyrrolidone, N-vinylcaprolactam, N-vinylcarbazole, 1-vinylimidazole, 2- vinylimidazole, 2-vinylpyridine, 4-vinylpyridine, acrylamide, methacrylamide, aminated acrylates, methacrylates, acrylamides, and/or methacrylamides.

8

There is also a detailed description of other suitable protective colloids in Houben-Weyl,"Methoden der organischen Chemie" [Methods of Organic Chemistry], volume XIV/1 , Makromolekulare Stoffe [Macromolecular materials], Georg-Thieme-Verlag, Stuttgart, 1961 , pages 411 to 420. It is also possible to use mixtures of protective colloids and/or emulsifiers. The dispersing agents used frequently comprise exclusively emulsifiers, where the relative molecular weights of these, unlike those of the protective colloids, are usually below 1000.

They can be either anionic, cationic, or nonionic. If a mixture of surfactant substances is used, the individual components should be mutually compatible. Anionic emulsifiers are generally compatible with one another and with nonionic emulsifiers.

The same also applies to cationic emulsifiers, whereas anionic and cationic emulsifiers should mostly not be combined with one another. An overview of suitable emulsifiers is found in Houben-Weyl, "Methoden der organischen Chemie", volume XIV/1 , Makromolekulare Stoffe, Georg-Thieme-Verlag, Stuttgart, 1961 , pages 192 to 208. Particular dispersing agents used in the invention are emulsifiers, such as anionic, cationic, or nonionic surfactants. Examples of familiar nonionic emulsifiers are oxylated mono-, di- and trialkylphenols, and also ethoxylated fatty alcohols.

Examples of conventional anionic emulsifiers are the alkali metal and ammonium salts of alkyl sulfates (having C8-C12-alkyl residue), of sulfuric acid hemiesters of ethoxylated alkanols (alkyl residue: C12-C18), and of ethoxylated alkylphenols (alkyl residue: C4-C12), and of alkylsulfonic acids (alkyl residue: C12-C18). Preferred alkali metal salts of alkylsulfonic acids are alkansulfonate sodium salts which are commercially available as Mersolat® H95 or K30 from Lanxess.

Suitable cationic emulsifiers are inter alia phosphonium salts, sulfonium salts, tropylium salts, morpholinium salts, oxazolinium salts, imidazolinium salts, pyridinium salts, and primary, secondary, tertiary, or quaternary ammonium salts having C8 to C18-alkyl, alkylaryl, or heterocyclic residues. Examples of compounds are inter alia N-laurylpyridinium sulfate, N-cetylpyridinium sulfate, dodecylammonium acetate or the corresponding sulfate, and disulfates or acetates of the various paraffinic esters that involve 2-(N,N,N-trimethylammonium)ethyl residues. The emulsifiers and protective colloids can also be used in the form of mixtures.

The total amount used of the emulsifiers preferred for use as dispersing agents is advantageously from 0.005 to 5% by weight, preferably from 0.01 to 5% by weight, in particular from 0.1 to 3% by weight, based in each case on the total concentration of monomer. The total amount of the protective colloids used as dispersing agents in addition to or instead of the emulsifiers is often from 0.1 to 10% by weight, and frequently from 0.2 to 7% by weight, based in each case on the total monomer concentration. However, the dispersing agents used preferably comprise anionic and/or nonionic emulsifiers and particularly preferably comprise anionic emulsifiers.

Other polymerization auxiliaries that can be used during the polymerization reaction are the conventional buffer substances, which can adjust to pH values which are preferably from 6 to 11, examples being sodium bicarbonate and sodium pyrophosphate, and also from 0 to 3% by weight of a molecular-weight regulator, e.g. mercaptans, terpineols, or dimeric o-methylstyrene. The buffer substances can also have a complexing action.

The polymerization reaction can be carried out in the range from 20 to 170 °C. Temperatures used are generally from 30 to 120 °C, preferably 40 to 100 °C, more preferably from 50 to 80 °C.

The polymers (B1) produced in the manner described above are suitable as graft base for producing the graft copolymers (B).

An important parameter for graft copolymers is the graft yield, which is 100% in the case of complete grafting. Graft copolymers with maximum graft yield are advantageous for many applications, since these comprise only small amounts of free polymer derived from the monomers. The polymer not bound to the rubber can have an adverse effect on the physical properties of the copolymer, and this is particularly noticeable in mixtures with other components.

The graft shell (B2) is produced in one or more steps via an emulsion polymerization process, optionally after agglomeration. The graft shell (B2) is polymerized in the presence of the graft base (B1) obtained by the process described above. It is advantageous that this graft copolymerization reaction is again carried out in aqueous emulsion, under the conventional conditions described above.

The system in which the graft copolymerization reaction takes place to produce the graft shell (B2) can be the same as that used for the emulsion polymerization reaction to produce the graft base (B1), and it is possible here, if necessary, to add further emulsifiers, and also auxiliaries. The monomers to be grafted onto the graft base are preferably added to the reaction mixture in at least two steps, more preferably two steps, as described above in order to construct a graft shell B2 comprising at least two graft layers B2-1 and B2-2, preferably a graft shell B2 composed of two graft layers B2-1 and B2-2.

The degree of grafting (DG) is the amount of the graft monomers used divided by the total sum of the monomers (graft base monomers and graft monomers) used for the graft copolymer. The graft copolymerization of the mixture of components present in the graft shell and optionally of further monomers, in the presence of graft base (B1) is carried out in such a way as to give a degree of grafting of 30 to 50 wt.-%, preferably 35-45 wt.-%. Since the graft yield (GY) is generally not 100%, the portion of the polymers actually grafted onto the material is smaller than the amount used. It follows from this that some free polymers are produced. One of the possible ways of controlling the graft yield during the graft polymerization reaction uses the metering rate of the monomers, or uses variables relating to the addition of initiator and of regulator. By way of example, addition of a larger amount of regulator (e.g. mercaptans) leads to a larger amount of free polymers.

The graft polymerization reaction can also be initiated by using graft-active and water-soluble redox systems. By way of example, conventional water-soluble initiators, e.g. potassium peroxodisulfate, sodium peroxodisulfate, ammonium peroxodisulfate, or hydrogen peroxide can be used together with at least one conventional reducing agent, e.g. sodium sulfite, sodium disulfite, sodium hydrogensulfite, sodium dithionite, ascorbic acid, sugar, or the sodium salt of hydroxymethanesulfonic acid, as redox system. In many instances, these redox systems give relatively large-particle dispersions. Particularly suitable redox catalysts with high graft activity are water-soluble initiator systems, e.g. redox systems made of hydrogen peroxide and heavy-metal ions, examples being the cerium salts, manganese salts, and iron(II) salts, as described by way of example in Houben-Weyl,"Methoden der organischen Chemie", 4th edition, volume E 20, p. 2168. Potassium peroxodisulfate is particularly suitable.

The conduct of the polymerization reaction can be such that the heavy-metal salt of the redox system, e.g. the iron(II) salt, is added to the mixture before the polymerization reaction begins, whereas the peroxide is metered in simultaneously with the monomers, but separately therefrom. Examples of concentrations used for the iron(II) salt are from 1 to 200 mg/l of Fe(II) ions, based on the entire dispersion, but higher and lower concentrations are also possible here.

There are various ways of introducing the redox initiator system, an example being addition in portions, as described in WO 01/30901 or WO 02/28931. The oxidant used preferably comprises cumene hydroperoxide (optionally in a mixture with cumene), where this is in particular introduced to some extent continuously and to some extent in portioned form (e.g. once).

Conventional initiators, such as oil-soluble or sparingly water-soluble organic peroxides or azo initiators can be used in addition to the redox initiators. By way of example, it is advantageous to add further reducing agents, these preferably being used as initial charge with the iron salt prior to the polymerization reaction.

Examples of reducing agents that can be used are sodium sulfite, sodium disulfite, sodium hydrogensulfite, sodium dithionite, ascorbic acid, reducing sugars, and also the sodium salt of hydroxymethanesulfonic acid.

The molecular weight of the grafted-on polymer can also be adjusted via concomitant use of chain-transfer agents or of molecular-weight regulators (MR), e.g. n-dodecyl mercaptan, tert-dodecyl mercaptan, n-butyl mercaptan, or tert-butyl mercaptan. Odor-free regulators are also suitable, an example being terpineols, see also EP-A 1191044.

The polymerization reaction is frequently carried out at pH values of from 2.5 to 12, preferably at pH values of from 7 to 11. The pH value can be adjusted to the desired value prior to or during the polymerization reaction by using conventional acids, such as hydrochloric acid, sulfuric acid, or acetic acid, or else by using bases, such as sodium hydroxide solution, potassium hydroxide solution, ammonia, ammonium carbonate or sodium bicarbonate solution. It is preferable to adjust the pH value of the aqueous polymer dispersion to from 7 to 11 after the polymerization reaction, via addition of sodium hydroxide solution, potassium hydroxide solution, ammonia or sodium bicarbonate solution.

Between production of the graft base (B1) and application of the graft shell (B2), an agglomeration step can be carried out, in order to achieve further controlled setting of particle sizes and particle size distributions. Various processes for partial or complete agglomeration of the graft base (B1) are known to the person skilled in the art, see by way of example EP-A 1 305345, EP-A 029613, EP-A 007810, DE-A 1233131, DE-A 1258 076 and DE-A 2101650.

In one preferred embodiment of the present invention, no agglomeration step is used.

Thermoplastic molding composition

One further aspect of the invention is a thermoplastic molding composition comprising a polymer mixture PM consisting of components A and B:

(A) 30 to 85 wt.-%, preferably 40 to 80 wt.-%, more preferably 55 to 75 wt.-%, of at least one thermoplastic copolymer A comprising (consisting of) at least one vinylaromatic monomer, preferably styrene, A1, and at least one vinylcyan monomer, preferably acrylonitrile, A2;

(B) 15 to 70 wt.-%, preferably 20 to 60 wt.-%, more preferably 25 to 45 wt.-%, of at least one graft copolymer B as defined above;

where the sum of A and B adds up to 100 wt.-%.

In the thermoplastic molding composition of the invention, the fraction of the polymer mixture PM - consisting of components A and B - is generally 40 to 100 wt.-%, preferably 70 to 100 wt.-%, most preferably 80 to 100 wt.-%, based on the overall molding composition.

The thermoplastic molding composition of the invention may optionally further comprise at least one further graft copolymer C - different from graft copolymer B - composed of an elastomeric, crosslinked acrylate polymer C1 as graft base C1 and at least one graft shell C2 made of a mixture comprising (consisting of) vinyl aromatic monomers C2-1 and vinylcyan monomers C2-2.

The fraction of the graft copolymer C is generally 0 to 30 wt.-%, preferably 0 to 20 wt.- %, based on the overall molding composition. If polymer C is present in the molding composition, its minimum fraction is customarily 0.1 wt.-%.

Furthermore, the molding composition of the invention may optionally comprise additives and/or auxiliaries D. The fraction of the additives and/or auxiliaries D is generally 0 to 20 wt.-%, preferably 0 to 10 wt.-%, based on the overall molding composition. If additives and/or auxiliaries C are present in the molding composition, their minimum fraction is customarily 0.1 wt.-%.

The thermoplastic molding composition of the invention may optionally further comprise at least one further thermoplastic polymer E selected from aromatic polycarbonates and polyamides. The fraction of the polymer E can be up to 50 wt.-%, often up to 30 wt.-%, preferably up to 20 wt.-%, more preferably up to 10 wt.-%, based on the overall molding composition. If polymer E is present in the molding composition, its minimum fraction is customarily 0.1 wt.-%.

Thermoplastic molding compositions comprising no thermoplastic polymers E are preferred.

The sum of the polymer mixture PM - consisting of components A and B - and further optional components C, D and/or E present in the overall molding composition adds up to 100 wt.-%.

According to one embodiment of the invention the thermoplastic molding composition comprises (or consists of):

40 to 100 wt.-% of a polymer mixture PM consisting of components A and B as defined above;

0 to 30 wt.-% of at least one further graft copolymer C - different from graft copolymer B - composed of an elastomeric, crosslinked acrylate polymer C1 (= graft base C1 ) and at least one graft shell C2, which is obtained via emulsion polymerization in the presence of at least one graft base C1, which graft shell C2 is made of a mixture comprising at least one vinyl aromatic monomer c21 and at least one vinylcyan monomer c22;

0 to 20 wt.-% of additives and/or auxiliaries D; and

0 to 50 wt.-% of at least one further thermoplastic polymer E selected from aromatic polycarbonates and polyamides;

based in each case on the overall molding composition, and where the sum of PM, and optional components C, D and/or E adds up to 100 wt.-%.

According to one further embodiment of the invention the afore-mentioned molding composition comprises (or consists of):

70 to 100 wt.-%, preferably 80 to 100 wt.-% of a polymer mixture PM;

0 to 30 wt.-%, preferably 0 to 20 wt.-%, of at least one further graft copolymer C;

0 to 10 wt.-%, preferably 0 to 5 wt.-%, of additives and/or auxiliaries D; and

0 to 30 wt.-%, preferably 0 to 20 wt.-.%, of at least one further thermoplastic polymer E; based in each case on the overall molding composition, and where the sum of PM, and optional components C, D and/or E adds up to 100 wt.-%.

Often molding compositions of the invention comprise (or consist of):

80 to 99.9 wt.-%, preferably 90 to 99.9 wt.-%, more preferably 95 to 99.5 wt.-%, of a polymer mixture PM consisting of components A and B as defined above; and

0.1 to 20 wt.-%, preferably 0.1 to 10 wt.-%, more preferably 0.5 to 5 wt.-%, of additives and/or auxiliaries D; and based in each case on the overall molding composition, where the sum of PM, and component D adds up to 100 wt.-%.

Component A

The thermoplastic copolymer A is a rubber free resin. Amounts used of component A are from 30 to 85 wt.-%, preferably 40 to 80 wt.-%, more preferably 55 to 75 wt.-%.

Suitable vinyl aromatic monomers A1 are styrene and styrene derivatives such as alpha-methyl styrene and ring-alkylated styrenes, for example p-methyl styrene. It is preferable to use styrene or alpha-methyl styrene, and in particular styrene. Preferred vinylcyan monomers A2 used are acrylonitrile and/or methacrylonitrile, preferably acrylonitrile.

The proportion of the vinyl aromatic monomer (such as styrene) A1 in the copolymer A is generally from 65 to 75% by weight, preferably from 66 to 68% by weight, often about 67% by weight. The proportion of the vinylcyan monomer A2 in the copolymer A is generally from 20 to 35% by weight, preferably 25 to 35 wt.-%, more preferably from 30 to 34% by weight, often 32 to 34 % by weight.

It is possible for vinyl aromatic monomers A1, in particular styrene, and/or vinylcyan monomers A2, in particular acrylonitrile (AN), to be replaced partially (up to 30 wt.-%, preferably up to 20 wt.-%, more preferably up to 15 wt.-%) by other copolymerizable monomers preferably such as methyl methacrylate, N-phenyl maleimide and/or maleic anhydride, preference is given to methyl methacrylate and/or maleic anhydride.

The weight average molecular weight $M_W$ of copolymer A ranges preferably from 20,000 to 200,000 g/mol. The intrinsic viscosity [h] of the thermoplastic copolymer A is preferably from 20 to 110 ml/g (determined in DMF at 25 °C). The viscosity number VN of copolymer A is preferably from 50 to 100 cm$^3$/g, more preferably from 55 to 85 cm$^3$/g (determined according to DIN 53726 at 25°C on a 0.5 wt.-% strength solution of copolymer A in DMF).

Copolymer A is preferably a copolymer of styrene and acrylonitrile. This SAN copolymer is often produced with 65 to 67% by weight of styrene and 33 to 35 % by weight of AN. The weight average molecular weight (Mw) of the SAN copolymer A is often in the range of from 100,000 to 180,000 g/mol, measured by conventional methods known to the person skilled in the art, e.g. gel permeation chromatography (GPC).

Copolymer A can be produced by well-known methods (DE-A 31 49 358 and DE-A 32 27 555), for example by well-known bulk, solution, suspension, or aqueous emulsion copolymerization at conventional temperatures in known apparatuses.

Further suitable in accordance with the invention as copolymer A are also alpha-methyl styrene-acrylonitrile copolymers, styrene-acrylonitrile-maleic anhydride copolymers, styrene-acrylonitrile-phenylmaleimide copolymers, alpha-methyl styrene-acrylonitrile-methyl methacrylate copolymers, alpha-methyl styrene-acrylonitrile-tert-butyl methacrylate copolymers, and styrene-acrylonitrile-tert-butyl methacrylate copolymers.

Component C

Graft copolymer C is different from graft copolymer B. Graft copolymer C is composed of an elastomeric, crosslinked acrylate polymer C1 (= graft base C1 ) and at least one graft shell C2, which is obtained via emulsion polymerization in the presence of at least one graft base C1, which graft shell C2 is made of a mixture comprising (consisting of) at least one vinyl aromatic monomer c21 and at least one vinylcyan monomer c22.

Preferably graft copolymer C is composed of

C1: 50 to 80 wt.-%, preferably 60 to 70 wt.-%, based on C, of graft base C1, an elastomeric, crosslinked acrylate polymer C1;

C2: 20 to 50 wt.-%, preferably 30 to 40 wt.-%, based on C, of at least one graft shell C2, which is obtained via emulsion polymerization in the presence of at least one graft base C1, which graft shell C2 is made of a mixture comprising (consisting of) at least one vinyl aromatic monomer c21 and at least one vinylcyan monomer c22, where the amount of c22, based on the total amount of C2, is 20 to 35 wt.- %, preferably 22 to 30 wt.-%.

More preferably graft copolymer C is composed of

C1: 50 to 80 wt.-%, preferably 60 to 70 wt.-%, based on C, of at least one graft base C1, an elastomeric, crosslinked acrylate polymer C1, made from 95 to 99.9 wt.- %, preferably 97.5 to 99.9 wt.-%, of at least one C2-C8-alkyl acrylate, preferably
C2-C4-alkyl acrylate, more preferably butyl acrylate, and from 0.1 to 5 wt.-%, preferably 0.1 to 2.5 wt.-%, of at least one crosslinking bi- or polyfunctional comonomer having at least two olefinic double bonds, in particular DCPA and/or AMA;

C2: 20 to 50 wt.-%, preferably 30 to 40 wt.-%, based on C, of at least one graft shell C2, which is obtained via emulsion polymerization in the presence of at least one graft base C1, which graft shell is made of a mixture of comprising (consisting of) at least one vinyl aromatic monomer, in particular styrene, c21 and at least one vinylcyan monomer, in particular acrylonitrile, c22, where the amount of c22, based on the total amount of C2, is 20 to 35 wt.-%, preferably 22 to 30 wt.-%.

According to a first embodiment the aforementioned graft copolymer C has one graft shell C2 consisting of only one layer (= single layer) made of a mixture comprising (consisting of) at least one vinyl aromatic monomer, in particular styrene, C2-1 and at least one vinylcyan monomer, in particular acrylonitrile, C2-2. According to this first embodiment the volume average particle diameter dv of the graft base C1 can be within wide ranges such as 60 to 700 nm, often in the range of from 80 to 550 nm.

Graft copolymers C according to this first embodiment and their preparation are known and described in the prior art (e.g. EP-A 0006503).

According to a second embodiment the aforementioned graft copolymer C has one graft shell C2 consisting of a first layer C2-1 made from at least one vinyl aromatic monomer c21-1, in particular styrene, and a second layer C2-2 made of a mixture comprising (consisting of) at least one vinyl aromatic monomer, in particular styrene, c21-2, and at least one vinylcyan monomer, in particular acrylonitrile, c22-2, where the amount of c22-2, based on the total amount of C2-2, is 20 to 35 wt.-%, preferably 22 to 30 wt.-%, and wherein the volume average particle diameter dv of the graft base C1 is in the range of from 300 to 700 nm, preferably 350 to 650 nm, more preferably 400 to 600 nm.

Preferably the fraction of the first layer C2-1 - based on the total amount of C2 - is more than 30 wt.-%.

Graft copolymers C according to this second embodiment and their preparation are known and described in the prior art (e.g. US 2016/0297957 A1, graft copolymer B).

Suitable acrylate monomers c11 which can be used for the preparation of the graft base polymer C1 are C2-C8-alkyl acrylates.

The alcohol component of the C2-C8-alkyl acrylate can be of linear or branched structure, a linear structure is preferred. Particularly suitable are C2-C8-alkyl acrylates, in particular ethyl acrylate, 2-ethylhexyl acrylate, and n-butyl acrylate. Preference is given to 2-ethylhexyl acrylate and n-butyl acrylate, and very particular preference is given to n-butyl acrylate. It is also possible to use a mixture of various C2-C8-alkyl (meth)acrylates differing in their alkyl residue. Preferably one C2-C8-alkyl acrylate, more preferably one C2-C4-alkyl acrylate, most preferably n-butyl acrylate is used.

The rubbery graft base C1 moreover comprises at least one crosslinking monomer c12. Such monomers are bi- or polyfunctional comonomers as described above - as monomer b13 - for graft base B1. Particular preference is given to DCPA and also to AMA.

The crosslinking comonomer c12, in particular DCPA, is often used in amounts of from 0.1 to 5 wt.-%, preferably 0.1 to 2.5 wt.-%, based on C1. It is possible to use two crosslinking monomers c12, but preferable to use only one.

Component D

The molding composition of the invention may optionally comprise additives and/or auxiliaries (processing aids) D such as stabilizers, oxidation retarders, agents to counter thermal decomposition and decomposition due to ultraviolet light, lubricants and mold release agents, colorants such as dyes and pigments, fibrous and pulverulent fillers and reinforcing agents, nucleating agents, plasticizers, etc.; the fraction thereof being in general not more than 20 wt.-%, preferably not more than 10 wt.-%, more preferably not more than 5 wt.-%.

Examples of oxidation retarders and heat stabilizers are halides of the metals from group I of the periodic table, examples being sodium, potassium and/or lithium halides, optionally in combination with copper(I) halides, e.g., chlorides, bromides, iodides, sterically hindered phenols, hydroquinones, different substituted representatives of these groups, and mixtures thereof, in concentrations of up to 1 wt.-%, based on the weight of the thermoplastic molding composition.

UV stabilizers, used generally in amounts of up to 2 wt.-%, based on the molding composition, include various substituted resorcinols, salicylates, benzotriazoles, and benzophenones.

Furthermore, organic dyes may be added, such as nigrosine, pigments such as titanium dioxide, phthalocyanines, ultramarine blue, and carbon black as colorants, and also fibrous and pulverulent fillers and reinforcing agents. Examples of the latter are carbon fibers, glass fibers, amorphous silica, calcium silicate (wollastonite), aluminum silicate, magnesium carbonate, kaolin, chalk, powdered quartz, mica, and feldspar. The fraction of such fillers and colorants is generally up to 20 wt.-%, preferably up to 10 wt.-%.

Examples of nucleating agents that can be used are talc, calcium chloride, sodium phenylphosphinate, aluminum oxide, silicon dioxide, and nylon 22.

Examples of lubricants and mold release agents, which can be used in general in amounts up to 1 wt.-%, are long-chain fatty acids such as stearic acid or behenic acid, their salts (e.g., Ca or Zn stearate) or esters (e.g., stearyl stearate or pentaerythrityl tetrastearate), and also amide derivatives (e.g., ethylenebisstearylamide). For better processing, mineral-based antiblocking agents may be added in amounts up to 0.1 wt.-% to the molding compositions of the invention. Examples include amorphous or crystalline silica, calcium carbonate, or aluminum silicate.

Processing aids which can be used are, for example, mineral oil, preferably medical white oil, in amounts up to 5 wt.-%, preferably up to 2 wt.-%.

Examples of plasticizers include dioctyl phthalate, dibenzyl phthalate, butyl benzyl phthalate, hydrocarbon oils, N-(n-butyl) benzenesulfonamide, and o- and p-tolyl ethylsulfonamide. For further improving the resistance to inflammation, it is possible to add all of the flame retardants known for the thermoplastics in question, particularly those flame retardants based on phosphorus compounds and/or on red phosphorus.

Component E

The molding composition of the invention may further comprise at least one further thermoplastic polymer E selected from aromatic polycarbonates and polyamides.

Suitable aromatic polycarbonates are known per se. They are obtainable, for example, in accordance with the processes of DE-B-1 300 266, by interfacial polycondensation, or the process of DE-A 14 95 730, by reaction of biphenyl carbonate with bisphenols. A preferred bisphenol is 2,2-di(4-hydroxyphenyl)propane, referred to generally - and also below - as bisphenol A. In place of bisphenol A it is also possible to use other aromatic dihydroxy compounds, especially 2,2-di(4-hydroxyphenyl)pentane, 2,6-dihydroxynaphthalene, 4,4'-dihydroxydiphenyl sulfone, 4,4'-dihydroxydiphenyl ether, 4,4'-dihydroxydiphenyl sulfite, 4,4'-dihydroxydiphenylmethane, 1,1-di(4-hydroxyphenyl)ethane or 4,4-dihydroxybiphenyl, and also mixtures of the aforesaid dihydroxy compounds.

Particularly preferred polycarbonates are those based on bisphenol A or bisphenol A together with up to 30 mol.-% of the aforementioned aromatic dihydroxy compounds.

The relative viscosity of these polycarbonates is generally in the range from 1.1 to 1.5, more particularly 1.28 to 1.4 (noted at 25°C in a 0.5 wt.-% strength solution in dichloromethane).

Partially crystalline, preferably linear polyamides such as polyamide 6, polyamide 6,6, polyamide 4,6, polyamide 6,12, and partially crystalline copolyamides based on these components are suitable. It is further possible to use partially crystalline polyamides whose acid component consists wholly or partly of adipic acid and/or terephthalic acid and/or isophthalic acid and/or suberic acid and/or sebacic acid and/or azelaic acid and/or dodecanedicarboxylic acid and/or a cyclohexanedicarboxylic acid, and whose diamine component consists wholly or partly in particular of m- and/or p-xylylenediamine and/or hexamethylenediamine and/or 2,2,4- and/or 2,4,4-trimethylhexamethylenediamine and/or isophoronediamine, and whose compositions are known in principle (cf. Encyclopedia of Polymers, vol. 11, p. 315 ff.).

The number average molecular weight (Mn) of the polyamides suitable as component B is preferably in the range between 5000 and 100 000 g/mol, more preferably between 10 000 and 80 000 g/mol.

Suitability is possessed by partially crystalline linear polyamides, for example, having a relative viscosity of 2.2 to 4.5, measured in 0.5% strength solution (0.5 g/100 ml) in 96 wt.-% strength sulfuric acid at 25°C.

Preferred polyamides are those deriving wholly or partly from lactams having 7 to 13 ring members, such as polycaprolactam, poly-caprylyllactam or polyurolactam. Further suitable are polyamides obtained by reacting dicarboxylic acids with one or more diamines. Examples of suitable dicarboxylic acids are alkanedicarboxylic acids having 6 to 12, especially 6 to 10, carbon atoms, especially adipic acid. Examples of suitable diamines are alkane- or cycloalkanediamines having 4 to 12, especially 4 to 8, carbon atoms; hexamethylenediamine, m-xylylenediamine, bis(4-aminophenyl)-methane, bis(4-aminocyclohexyl)methane or 2,2-bis(4-aminophenyl)propane, or mixtures thereof, are particularly suitable partners for preparing such polyamides. It may be advantageous to prepare the stated polyamides per se and to use mixtures thereof.

Of particular technical significance are polyamide 6 (polycaprolactam), polyamide 6,6 (polyhexamethyleneadipamide), and polyamides composed of at least 80 wt.-% of repeating units of the formula -[-NH-(CH2)4-NH-CO-(CH2)4-CO-)-. The last-mentioned polyamides are obtainable by condensing 1,4-diaminobutane with adipic acid. Suitable preparation processes for polyamides are described for example in EP-A 38 094, EP- A 38 582, and EP-A 39 524.

Likewise suitable are polyamides with a small fraction, preferably up to about 10 wt.-%, of other cocondensable constituents, especially other amide formers such as, for example, $\alpha,\omega$-amino acids or N-carboxylic anhydrides (Leuchs' anhydrides) of amino acids.

Preferred partially aromatic copolyamides E contain 40 to 90 wt.-% of units deriving from terephthalic acid and hexamethylenediamine. A small fraction of the terephthalic acid, preferably not more than 10 wt.-% of the total amount of aromatic dicarboxylic acids used, may be replaced by isophthalic acid or other aromatic dicarboxylic acids, preferably those in which the carboxyl groups are in para position.

Besides the units deriving from terephthalic acid and hexamethylenediamine, the partially aromatic copolyamides contain units which derive from $\varepsilon$-caprolactam and/or units which derive from adipic acid and hexamethylenedia-mine. The fraction of units deriving from $\varepsilon$-caprolactam is up to 50 wt.-%, preferably 20 to 50 wt.-%, especially 25 to 40 wt.-%, while the fraction of units deriving from adipic acid and hexamethylenediamine is up to 60 wt.-%, preferably 30 to 60 wt.-%, and especially 35 to 55 wt.-%. The copolyamides may also contain both units of $\varepsilon$-caprolactam and units of adipic acid and hexamethylenediamine; in this case, the fraction of units which are free from aromatic groups is preferably at least 10 wt.-%, more preferably at least 20 wt.-%. The ratio of the units deriving from e-caprolactam and from adipic acid and hexamethylenedia- mine is not subject to any particular restriction here.

The melting point of particularly suitable partially aromatic copolyamides is situated for example in the range from 260 to more than 300°C, this high melting point also being associated with a high glass transition temperature of generally more than 75°C, especially more than 85°C. Binary copolyamides based on terephthalic acid, hexamethylenediamine, and $\varepsilon$-caprolactam, for a content of about 70 wt.-% of units deriving from terephthalic acid and hexamethylenediamine, have a melting point in the range of 300°C and a glass transition temperature of more than 110°C. Binary copolyamides based on terephthalic acid, adipic acid, and hexamethylenediamine reach a melting point of 300°C or more at a level of just about 55 wt.-% of units of terephthalic acid and hexamethylenediamine, with the glass transition temperature being not quite as high as for binary copolyamides which comprise e-caprolactam in place of adipic acid or adipic acid/hexamethylenediamine.

Suitable partially aromatic copolyamides can be prepared by the processes described in EP-A 129195 and EP-A 129196.

Preparation of the thermoplastic molding composition

The thermoplastic molding compositions of the invention may be produced from components A and B (and optionally further components C, D and/or E) by all known methods. The graft polymers B are mixed with the copolymer A and, where present, with the further components C, D and/or E in a mixing apparatus, producing a substantially liquid-melt polymer mixture. "Substantially liquid-melt" means that the polymer mixture, as well as the predominant liquid-melt (softened) fraction, may further comprise a certain fraction of solid constituents, examples being unmelted fillers and reinforcing material such as glass fibers, metal flakes, or else unmelted pigments, colorants, etc. "Liquid-melt" means that the polymer mixture is at least of low fluidity, therefore having softened at least to an extent that it has plastic properties.

Mixing apparatuses used are those known to the skilled person. Components A and B, and - where included - C, D and/or E may be mixed, for example, by joint extrusion, kneading, or rolling, the aforementioned components necessarily having been isolated from the aqueous dispersion or from the aqueous solution obtained in the polymerization.

Where one or more components in the form of an aqueous dispersion or of an aqueous or non-aqueous solution are mixed in, the water and/or the solvent is removed from the mixing apparatus, preferably an extruder, via a degassing unit.

Examples of mixing apparatus for implementing the method includes discontinuously operating, heated internal kneading devices with or without RAM, continuously operating kneaders, such as continuous internal kneaders, screw kneaders with axially oscillating screws, Banbury kneaders, furthermore extruders, and also roll mills, mixing roll mills with heated rollers, and calenders.

A preferred mixing apparatus used is an extruder. Particularly suitable for melt extrusion are, for example, single-screw or twin-screw extruders. A twin-screw extruder is preferred.

In some cases the mechanical energy introduced by the mixing apparatus in the course of mixing is enough to cause the mixture to melt, meaning that the mixing apparatus does not have to be heated. Otherwise, the mixing apparatus is generally heated. The temperature is guided by the chemical and physical properties of components A and B and - when present - C, D and/or E, and should be selected such as to result in a substantially liquid-melt polymer mixture. On the other hand, the temperature is not to be unnecessarily high, in order to prevent thermal damage of the polymer mixture. The mechanical energy introduced may, however, also be high enough that the mixing apparatus may even require cooling. Mixing apparatus is operated customarily at 160 to 400 °C, preferably 180 to 300 °C, more preferably 220 to 250 °C. In one preferred embodiment the mixing of the graft polymer B and - if present - graft copolymer C - with the copolymer A and, where included, with the further components D and/or E takes place in an extruder, with the dispersion of the graft polymer B and - if present - graft copolymer C, being metered directly into the extruder, without prior removal of the dispersion water. The water is customarily removed along the extruder via suitable degassing facilities. Degassing facilities used may be, for example, degassing vents which are provided with retention screws (preventing the emergence of the polymer mixture).

In another, likewise preferred embodiment, the mixing of the aforementioned components takes place in an extruder, with the graft polymer B, and if present graft copolymer C, being separated beforehand from the dispersion water. As a result of this prior removal of the dispersion water, water-moist graft polymers B (and optionally graft polymers C) are obtained which have a residual water content of up to 60 wt.-%, based on B (or C). The residual water present may then be removed in vapor form as described above via degassing facilities in the extruder. With particular preference, however, the residual water in the extruder is not removed solely as steam; instead, a part of the residual water is removed mechanically in the extruder and leaves the extruder in the liquid phase. In the case of this so-called squeeze method (EP-B 0 993 476, pp. 13-16), the same extruder is supplied with the copolymer A and - where present - components D and/or E, meaning that the product of the method extruded is the completed molding composition.

The graft copolymers B according to the invention and in particular molding compositions according to the invention provide excellent impact strength and often good UV resistance making them valuable raw materials for numerous applications.

The invention further provides shaped articles produced from the thermoplastic molding compositions of the invention. The thermoplastic molding compositions of the invention can by way of example be pelletized or granulated, or processed to give shaped articles of any type, for example cable sheathing, films, hoses, fibers, profiles, shoe shells, technical moldings (such as motor vehicle parts), consumer items, and coatings, for example by extrusion, injection molding, blow molding or calendering.

A further subject of the invention is the use of graft copolymers B according to the invention and in particular the use of thermoplastic molding compositions according to the invention in the automotive industry, for building and construction, toys and leisure.

The invention is further illustrated by the following examples and claims.

Examples

Test Methods

The mean particle diameter Dv (volume average) was measured by a laser diffraction apparatus LS 13 320 (Beckman Coulter). Polarized intensity difference scattering (PIDS) can be used to mask the water optical model. The particle size distribution can be calculated by software using the Mie scattering theory by assuming an appropriate refractive index (RI) value 1.47 for the graft base B1, 1.52 for the graft shell B2 and 1.33 for the measured medium (water).

Abbreviations:

BA          butyl acrylate

2-EHA      2-ethylhexyl acrylate

2-PHA      2-propylheptyl acrylate

The acrylates (2-ethylhexyl acrylate, 2-propylheptyl acrylate, lauryl acrylate 1214 F, stearyl acrylate 1618) were obtained by BASF and used as received.

The obtained acrylate lauryl acrylate 1214 F was a mixture of acrylates of C12 and C14 alcohols and stearyl acrylate 1618 was a mixture of acrylates of C16 and C18 alcohols.

Butyl acrylate was obtained by IMCD Deutschland GmbH and used as received.

Component A:

Poly-(styrene-co-acrylonitrile) having an acrylonitrile content of 33 to 35 wt.-% and a viscosity number of 80 mL/g.

Synthesis of Graft Copolymer B:

Seed latex S-B1:

The reaction vessel was charged with 80.52 parts of demineralized water, 0.61 parts of the sodium salt of a C12- to C18-alkyl sulfonic acid and 0.25 parts sodium bicarbonate. When the temperature in the reaction vessel reached 59 °C, 0.18 parts of potassium persulfate dissolved in 5.89 parts of demineralized water was added. A mixture of 59.51 parts butyl acrylate and 1.21 parts tricyclodecenylacrylate was added within a period of 210 minutes. Afterwards the reaction mixture was maintained at a temperature of 59 °C for 60 minutes. A solution of 0.61 parts of the sodium salt of a C12- to C18-alkyl sulfonic acid in 7.84 parts demineralized water was added to the reaction mixture. The polymer dispersion had a solid content of 37.38 % and a mean particle diameter Dv of 88 nm.

Rubber Latex B1-1:

The reaction vessel was charged with 92.30 parts of demineralized water, 1.32 parts of seed latex S-B1 and 0.23 parts of sodium bicarbonate. The reaction mixture was heated to 60 °C. 0.18 Parts of potassium persulfate dissolved in 5.77 parts demineralized water were added. A mixture of 59.20 parts butyl acrylate and 1.09 parts tricyclodecenylacrylate was fed continuously over a period of 210 minutes. Simultaneously, a solution of 0.54 parts of the sodium salt of a C12-C18-alkyl sulfonic acid dissolved in 16.47 parts demineralized water was added over 210 minutes. After 210 minutes the temperature was raised to 65 °C and the reaction mixture stirred at that temperature for 60 minutes. After the reaction the polymer dispersion B1-1 had a total solid content from 34.0-34.4% and a mean particle diameter Dv of 279 to 291 nm.

Graft Copolymer B-1

0.17 Parts of the sodium salt of a C12-C18-alkyl sulfonic acid dissolved in 70.33 parts demineralized water were added to the basic latex B1-1. The reaction mixture was heated to 61 °C. 0.16 Parts of potassium persulfate dissolved in 5.14 parts demineralized water were added. 6.04 Parts styrene were added over 60 minutes to the reaction mixture. Afterwards the reaction mixture was stirred for 30 minutes. During these 90 minutes the reaction temperature was gradually raised from 61 °C to 65 °C. A mixture of 25.26 parts styrene and 8.42 parts of acrylonitrile were added to the reaction over 180 minutes at 65 °C. Afterwards the reaction mixture was stirred at 65 °C for 90 minutes. The resulting polymer dispersion B-1 had a solid content of 34.4-34.8% and a mean particle diameter Dv of 347 to 351 nm.The material was produced in different batches, resulting in small deviations for particle size and total solid content.

Rubber Latex B1-2:

The reaction vessel was charged with 92.30 parts of demineralized water, 1.32 parts of seed latex S-B1 and 0.23 parts of sodium bicarbonate. The reaction mixture was heated to 60 °C. 0.18 Parts of potassium persulfate dissolved in 5.77 parts demineralized water were added. A mixture of 53.28 parts butyl acrylate, 5.92 parts 2-ethylhexyl acrylate and 1.09 parts tricyclodecenylacrylate was fed continuously over a period of 210 minutes. Simultaneously, a solution of 0.54 parts of the sodium salt of a C12-C18-alkyl sulfonic acid dissolved in 16.47 parts demineralized water was added over 210 minutes. After 210 minutes the temperature was raised to 65 °C and the reaction mixture stirred at that temperature for 60 minutes. After the reaction the polymer dispersion B1-2 had a total solid content from 34.3% and a mean particle diameter Dv of 293 nm.

Graft Copolymer B-2

0.17 Parts of the sodium salt of a C12-C18-alkyl sulfonic acid dissolved in 70.33 parts demineralized water were added to the basic latex B1-2. The reaction mixture was heated to 61 °C. 0.16 Parts of potassium persulfate dissolved in 5.14 parts demineralized water were added. 6.04 Parts styrene were added over 60 minutes to the reaction mixture. Afterwards the reaction mixture was stirred for 30 minutes. During these 90 minutes the reaction temperature was gradually raised from 61 °C to 65 °C. A mixture of 25.26 parts styrene and 8.42 parts of acrylonitrile were added to the reaction over 180 minutes at 65 °C. Afterwards the reaction mixture was stirred at 65 °C for 90 minutes. The resulting polymer dispersion B-2 had a solid content of 34.6% and a mean particle diameter Dv of 349 nm.

Rubber Latex B1-3:

The reaction vessel was charged with 92.30 parts of demineralized water, 1.32 parts of seed latex S-B1 and 0.23 parts of sodium bicarbonate. The reaction mixture was heated to 60 °C. 0.18 Parts of potassium persulfate dissolved in 5.77 parts demineralized water were added. A mixture of 44.40 parts butyl acrylate, 14.80 parts 2-ethylhexyl acrylate and 1.09 parts tricyclodecenylacrylate was fed continuously over a period of 210 minutes. Simultaneously, a solution of 0.54 parts of the sodium salt of a C12-C18-alkyl sulfonic acid dissolved in 16.47 parts demineralized water was added over 210 minutes. After 210 minutes the temperature was raised to 65 °C and the reaction mixture stirred at that temperature for 60 minutes. After the reaction the polymer dispersion B1-3 had a total solid content from 34.3% and a mean particle diameter Dv of 290 nm.

Graft Copolymer B-3

0.17 Parts of the sodium salt of a C12-C18-alkyl sulfonic acid dissolved in 70.33 parts demineralized water were added to the basic latex B1-3. The reaction mixture was heated to 61 °C. 0.16 Parts of potassium persulfate dissolved in 5.14 parts demineralized water were added. 6.04 Parts Styrene were added over 60 minutes to the reaction mixture. Afterwards the reaction mixture was stirred for 30 minutes. During these 90 minutes the reaction temperature was gradually raised from 61 °C to 65 °C. A mixture of 25.26 parts styrene and 8.42 parts of acrylonitrile were added to the reaction over 180 minutes at 65 °C. Afterwards the reaction mixture was stirred at 65 °C for 90 minutes. The resulting polymer dispersion B-3 had a solid content of 34.6% and a mean particle diameter Dv of 349 nm.

Rubber Latex B1-4:

The reaction vessel was charged with 92.30 parts of demineralized water, 1.32 parts of seed latex S-B1 and 0.23 parts of sodium bicarbonate. The reaction mixture was heated to 60 °C. 0.18 Parts of potassium persulfate dissolved in 5.77 parts demineralized water were added. A mixture of 29.60 parts butyl acrylate, 29.60 parts 2-ethylhexyl acrylate and 1.09 parts tricyclodecenylacrylate was fed continuously over a period of 210 minutes. Simultaneously, a solution of 0.54 parts of the sodium salt of a C12-C18-alkyl sulfonic acid dissolved in 16.47 parts demineralized water was added over 210 minutes. After 210 minutes the temperature was raised to 65 °C and the reaction mixture stirred at that temperature for 60 minutes. After the reaction the polymer dispersion B1-4 had a total solid content from 33.7% and a mean particle diameter Dv of 288 nm.

Graft Copolymer B-4

0.17 Parts of the sodium salt of a C12-C18-alkyl sulfonic acid dissolved in 70.33 parts demineralized water were added to the basic latex B1-4. The reaction mixture was heated to 61 °C. 0.16 Parts of potassium persulfate dissolved in 5.14 parts demineralized water were added. 6.04 Parts styrene were added over 60 minutes to the reaction mixture. Afterwards the reaction mixture was stirred for 30 minutes. During these 90 minutes the reaction temperature was gradually raised from 61 °C to 65 °C. A mixture of 25.26 parts styrene and 8.42 parts of acrylonitrile were added to the reaction over 180 minutes at 65 °C. Afterwards the reaction mixture was stirred at 65 °C for 90 minutes. The resulting polymer dispersion B-4 had a solid content of 34.4% and a mean particle diameter Dv of 347 nm.

Rubber Latex B1-5:

The reaction vessel was charged with 92.30 parts of demineralized water, 1.32 parts of seed latex S-B1 and 0.23 parts of sodium bicarbonate. The reaction mixture was heated to 60 °C. 0.18 Parts of potassium persulfate dissolved in 5.77 parts demineralized water were added. A mixture of 56.24 parts butyl acrylate, 2.96 parts lauryl acrylate 1214 F and 1.09 parts tricyclodecenylacrylate was fed continuously over a period of 210 minutes. Simultaneously, a solution of 0.54 parts of the sodium salt of a C12-C18-alkyl sulfonic acid dissolved in 16.47 parts demineralized water was added over 210 minutes. After 210 minutes the temperature was raised to 65 °C and the reaction mixture stirred at that temperature for 60 minutes. After the reaction the polymer dispersion B1-5 had a total solid content from 33.1-33.7% and a mean particle diameter Dv of 281-284 nm.

Graft Copolymer B-5

0.17 Parts of the sodium salt of a C12-C18-alkyl sulfonic acid dissolved in 70.33 parts demineralized water were added to the basic latex B1-5. The reaction mixture was heated to 61 °C. 0.16 Parts of potassium persulfate dissolved in 5.14 parts demineralized water were added. 6.04 Parts styrene were added over 60 minutes to the reaction mixture. Afterwards the reaction mixture was stirred for 30 minutes. During these 90 minutes the reaction temperature was gradually raised from 61 °C to 65 °C. A mixture of 25.26 parts styrene and 8.42 parts of acrylonitrile were added to the reaction over 180 minutes at 65 °C. Afterwards the reaction mixture was stirred at 65 °C for 90 minutes. The resulting polymer dispersion B-5 had a solid content of 34.3-34.7% and a mean particle diameter Dv of 349 to 350 nm.
The material was produced in different batches, resulting in small deviations for particle size and total solid content.

Rubber Latex B1-6:

The reaction vessel was charged with 92.30 parts of demineralized water, 1.32 parts of seed latex S-B1 and 0.23 parts of sodium bicarbonate. The reaction mixture was heated to 60 °C. 0.18 Parts of potassium persulfate dissolved in 5.77 parts demineralized water were added. A mixture of 50.32 parts butyl acrylate, 8.88 parts lauryl acrylate 1214 F and 1.09 parts tricyclodecenylacrylate was fed continuously over a period of 210 minutes. Simultaneously, a solution of 0.54 parts of the sodium salt of a C12-C18-alkyl sulfonic acid dissolved in 16.47 parts demineralized water was added over 210 minutes. After 210 minutes the temperature was raised to 65 °C and the reaction mixture stirred at that temperature for 60 minutes. After the reaction the polymer dispersion B1-6 had a total solid content from 30.5% and a mean particle diameter Dv of 274 nm.

Graft Copolymer B-6

0.17 Parts of the sodium salt of a C12-C18-alkyl sulfonic acid dissolved in 70.33 parts demineralized water were added to the basic latex B1-6. The reaction mixture was heated to 61 °C. 0.16 Parts of potassium persulfate dissolved in 5.14 parts demineralized water were added. 6.04 Parts styrene were added over 60 minutes to the reaction mixture. Afterwards the reaction mixture was stirred for 30 minutes. During these 90 minutes the reaction temperature was gradually raised from 61 °C to 65 °C. A mixture of 25.26 parts styrene and 8.42 parts of acrylonitrile were added to the reaction over 180 minutes at 65 °C. Afterwards the reaction mixture was stirred at 65 °C for 90 minutes. The resulting polymer dispersion B-6 had a solid content of 34.0% and a mean particle diameter Dv of 349 nm.

Rubber Latex B1-7:

The reaction vessel was charged with 92.30 parts of demineralized water, 1.32 parts of seed latex S-B1 and 0.23 parts of sodium bicarbonate. The reaction mixture was heated to 60 °C. 0.18 Parts of potassium persulfate dissolved in 5.77 parts demineralized water were added. A mixture of 53.28 parts butyl acrylate, 5.92 parts 2-propylheptyl acrylate and 1.09 parts tricyclodecenylacrylate was fed continuously over a period of 210 minutes. Simultaneously, a solution of 0.54 parts of the sodium salt of a C12-C18-alkyl sulfonic acid dissolved in 16.47 parts demineralized water was added over 210 minutes. After 210 minutes the temperature was raised to 65 °C and the reaction mixture stirred at that temperature for 60 minutes. After the reaction the polymer dispersion B1-7 had a total solid content from 33.3% and a mean particle diameter Dv of 286 nm.

Graft Copolymer B-7

0.17 Parts of the sodium salt of a C12-C18-alkyl sulfonic acid dissolved in 70.33 parts demineralized water were added to the basic latex B1-7. The reaction mixture was heated to 61 °C. 0.16 Parts of potassium persulfate dissolved in 5.14 parts demineralized water were added. 6.04 Parts styrene were added over 60 minutes to the reaction mixture. Afterwards the reaction mixture was stirred for 30 minutes. During these 90 minutes the reaction temperature was gradually raised from 61 °C to 65 °C. A mixture of 25.26 parts styrene and 8.42 parts of acrylonitrile were added to the reaction over 180 minutes at 65 °C. Afterwards the reaction mixture was stirred at 65 °C for 90 minutes. The resulting polymer dispersion B-7 had a solid content of 34.2% and a mean particle diameter Dv of 348 nm.

Rubber Latex B1-8:

The reaction vessel was charged with 92.30 parts of demineralized water, 1.32 parts of seed latex S-B1 and 0.23 parts of sodium bicarbonate. The reaction mixture was heated to 60 °C. 0.18 Parts of potassium persulfate dissolved in 5.77 parts demineralized water were added. A mixture of 47.36 parts butyl acrylate, 11.84 parts 2-propylheptyl acrylate and 1.09 parts tricyclodecenylacrylate was fed continuously over a period of 210 minutes. Simultaneously, a solution of 0.54 parts of the sodium salt of a C12-C18-alkyl sulfonic acid dissolved in 16.47 parts demineralized water was added over 210 minutes. After 210 minutes the temperature was raised to 65 °C and the reaction mixture stirred at that temperature for 60 minutes. After the reaction the polymer dispersion B1-8 had a total solid content from 33.0% and a mean particle diameter Dv of 289 nm.

Graft Copolymer B-8

0.17 Parts of the sodium salt of a C12-C18-alkyl sulfonic acid dissolved in 70.33 parts demineralized water were added to the basic latex B1-8. The reaction mixture was heated to 61 °C. 0.16 Parts of potassium persulfate dissolved in 5.14 parts demineralized water were added. 6.04 Parts Styrene were added over 60 minutes to the reaction mixture. Afterwards the reaction mixture was stirred for 30 minutes. During these 90 minutes the reaction temperature was gradually raised from 61 °C to 65 °C. A mixture of 25.26 parts styrene and 8.42 parts of acrylonitrile were added to the reaction over 180 minutes at 65 °C. Afterwards the reaction mixture was stirred at 65 °C for 90 minutes. The resulting polymer dispersion B-8 had a solid content of 34.5% and a mean particle diameter Dv of 347 nm.

Rubber Latex B1-9:

The reaction vessel was charged with 92.30 parts of demineralized water, 1.32 parts of seed latex S-B1 and 0.23 parts of sodium bicarbonate. The reaction mixture was heated to 60 °C. 0.18 Parts of potassium persulfate dissolved in 5.77 parts demineralized water were added. A mixture of 35.52 parts butyl acrylate, 23.68 parts 2-propylheptyl acrylate and 1.09 parts tricyclodecenylacrylate was fed continuously over a period of 210 minutes. Simultaneously, a solution of 0.54 parts of the sodium salt of a C12-C18-alkyl sulfonic acid dissolved in 16.47 parts demineralized water was added over 210 minutes. After 210 minutes the temperature was raised to 65 °C and the reaction mixture stirred at that temperature for 60 minutes. After the reaction the polymer dispersion B1-9 had a total solid content from 30.6% and a mean particle diameter Dv of 280 nm.

Graft Copolymer B-9

0.17 Parts of the sodium salt of a C12-C18-alkyl sulfonic acid dissolved in 70.33 parts demineralized water were added to the basic latex. The reaction mixture was heated to 61 °C. 0.16 Parts of potassium persulfate dissolved in 5.14 parts demineralized water were added. 6.04 Parts styrene were added over 60 minutes to the reaction mixture. Afterwards the reaction mixture was stirred for 30 minutes. During these 90 minutes the reaction temperature was gradually raised from 61 °C to 65 °C. A mixture of 25.26 parts styrene and 8.42 parts of acrylonitrile were added to the reaction over 180 minutes at 65 °C. Afterwards the reaction mixture was stirred at 65 °C for 90 minutes. The resulting polymer dispersion B-9 had a solid content of 34.2% and a mean particle diameter Dv of 348 nm.

Rubber Latex B1-10:

The reaction vessel was charged with 92.30 parts of demineralized water, 1.32 parts of seed latex S-B1 and 0.23 parts of sodium bicarbonate. The reaction mixture was heated to 60 °C. 0.18 Parts of potassium persulfate dissolved in 5.77 parts demineralized water were added. A mixture of 56.24 parts butyl acrylate, 2.96 parts stearyl acrylate 1618 and 1.09 parts tricyclodecenylacrylate was fed continuously over a period of 210 minutes. Simultaneously, a solution of 0.54 parts of the sodium salt of a C12-C18-alkyl sulfonic acid dissolved in 16.47 parts demineralized water was added over 210 minutes. After 210 minutes the temperature was raised to 65 °C and the reaction mixture stirred at that temperature for 60 minutes. After the reaction the polymer dispersion B1-10 had a total solid content from 32.8% and a mean particle diameter Dv of 272 nm.

Graft Copolymer B-10

0.17 Parts of the sodium salt of a C12-C18-alkyl sulfonic acid dissolved in 70.33 parts demineralized water were added to the basic latex. The reaction mixture was heated to 61 °C. 0.16 Parts of potassium persulfate dissolved in 5.14 parts demineralized water were added. 6.04 Parts styrene were added over 60 minutes to the reaction mixture. Afterwards the reaction mixture was stirred for 30 minutes. During these 90 minutes the reaction temperature was gradually raised from 61 °C to 65 °C. A mixture of 25.26 parts styrene and 8.42 parts of acrylonitrile were added to the reaction over 180 minutes at 65 °C. Afterwards the reaction mixture was stirred at 65 °C for 90 minutes. The resulting polymer dispersion B-10 had a solid content of 33.7% and a mean particle diameter Dv of 347 nm.

Rubber Latex B1-11:

The reaction vessel was charged with 92.30 parts of demineralized water, 1.32 parts of seed latex S-B1 and 0.23 parts of sodium bicarbonate. The reaction mixture was heated to 60 °C. 0.18 Parts of potassium persulfate dissolved in 5.77 parts demineralized water were added. A mixture of 53.28 parts butyl acrylate, 5.92 parts stearyl acrylate 1618 and 1.09 parts tricyclodecenylacrylate was fed continuously over a period of 210 min. Simultaneously, a solution of 0.54 parts of the sodium salt of a C12-C18-alkyl sulfonic acid dissolved in 16.47 parts demineralized water was added over 210 minutes. After 210 minutes the temperature was raised to 65 °C and the reaction mixture stirred at that temperature for 60 minutes. After the reaction the polymer dispersion B1-11 had a total solid content from 31.5% and a mean particle diameter Dv of 266 nm.

Graft copolymer B-11

0.17 Parts of the sodium salt of a C12-C18-alkyl sulfonic acid dissolved in 70.33 parts demineralized water were added to the basic latex B1-11. The reaction mixture was heated to 61 °C. 0.16 Parts of potassium persulfate dissolved in 5.14 parts demineralized water were added. 6.04 Parts Styrene were added over 60 minutes to the reaction mixture. Afterwards the reaction mixture was stirred for 30 minutes. During these 90 minutes the reaction temperature was gradually raised from 61 °C to 65 °C. A mixture of 25.26 parts styrene and 8.42 parts of acrylonitrile were added to the reaction over 180 minutes

at 65 °C. Afterwards the reaction mixture was stirred at 65 °C for 90 minutes. The resulting polymer dispersion B-11 had a solid content of 33.2% and a mean particle diameter Dv of 346 nm.

Rubber Latex B1-12:

The reaction vessel was charged with 92.30 parts of demineralized water, 1.32 parts of seed latex S-B1 and 0.23 parts of sodium bicarbonate. The reaction mixture was heated to 60 °C. 0.18 Parts of potassium persulfate dissolved in 5.77 parts demineralized water were added. A mixture of 56.24 parts butyl acrylate, 2.96 parts 2-propylheptyl acrylate and 1.09 parts tricyclodecenylacrylate was fed continuously over a period of 210 minutes. Simultaneously, a solution of 0.54 parts of the sodium salt of a C12-C18-alkyl sulfonic acid dissolved in 16.47 parts demineralized water was added over 210 minutes. After 210 minutes the temperature was raised to 65 °C and the reaction mixture stirred at that temperature for 60 minutes. After the reaction the polymer dispersion B1-12 had a total solid content from 33.5-34.1% and a mean particle diameter Dv of 278 to 286 nm.

Graft copolymer B-12

0.17 Parts of the sodium salt of a C12-C18-alkyl sulfonic acid dissolved in 70.33 parts demineralized water were added to the basic latex B1-12. The reaction mixture was heated to 61 °C. 0.16 Parts of potassium persulfate dissolved in 5.14 parts demineralized water were added. 6.04 Parts styrene were added over 60 minutes to the reaction mixture. Afterwards the reaction mixture was stirred for 30 minutes. During these 90 minutes the reaction temperature was gradually raised from 61 °C to 65 °C. A mixture of 25.26 parts styrene and 8.42 parts of acrylonitrile were added to the reaction over 180 minutes at 65 °C. Afterwards the reaction mixture was stirred at 65 °C for 90 minutes. The resulting polymer dispersion B-12 had a solid content of 34.3-34.6% and a mean particle diameter Dv of 346 to 348 nm. The material was produced in different batches, resulting in small deviations for particle size and total solid content.

Precipitation and Drying:

1200 g of a $MgSO_4$ solution (20 wt.-%) was mixed with 21000 g demineralized water. 4400 g of this solution was used as pre-charge and heated to 88 °C. 9000 g of the polymer latex of graft copolymer B and 17800 g of the remaining diluted $MgSO_4$ solution were added separately within 5 minutes, while the temperature was kept at 88 °C. The resulting mixture was heated to 99 °C for 5 minutes. The resulting precipitate was collected by filtration, washed twice with demineralized water and dried at 70 °C for 2 to 3 days.

Compounding and Testing:

The presented polymer mixtures from components A and B were prepared by extrusion in a twin screw extruder apparatus, at a temperature gradient from 170-200°C to 250 °C according to the specified ratios in tables 1, 2 and 3. Prior to injection molding the compounds were dried for 4 h at 80 °C. Impact test specimen were prepared by injection molding (die temperature 270 °C). The impact strength was tested according to ISO 179/1eA (2010), SAW, Impact pendulum, 10 samples per material tested.

Test Results:

In the following test series the butyl acrylate (= monomer b11) was replaced gradually with other acrylate monomers in the polymerization step. The mass fraction (M) of acrylate b12 is referred to the total mass of butyl acrylate (= b11) and acrylate b12.

$$M \, (Acrylate \neq b11)[wt\%] = \frac{m \, (Acrylate \neq b11)}{m \, (Acrylate \neq b11) + m \, (n - butyl \, acrylate \, b11)} * 100$$

Comparative Example 1, Comparative Example 1* and Comparative Example 1**, respectively (samples marked with a star such as *or ** were obtained in repeated test series) show the pure butyl acrylate based rubber intermediate in the SAN-matrix.

Table 1: Thermoplastic molding compositions comprising one of graft copolymers B-1 to B-6 and copolymer A and their impact strength at 20°C and -10 °C.

| Example | Comp. Ex. 1 | Comp. Ex. 2 | Comp. Ex. 3 | Comp. Ex. 4 | Ex. 1 | Ex. 2 |
|---|---|---|---|---|---|---|
| A [wt.-%] | 65 | 65 | 65 | 65 | 65 | 65 |
| B-1 [wt.-%] | 35 | | | | | |
| B-2 [wt.-%] | | 35 | | | | |
| B-3 [wt.-%] | | | 35 | | | |
| B-4 [wt.-%] | | | | 35 | | |
| B-5 [wt.-%] | | | | | 35 | |
| B-6 [wt.-%] | | | | | | 35 |
| M (Acrylate ≠ b11) [wt.-%] | 0 | 10 | 25 | 50 | 5 | 15 |
| | | | | | lauryl | lauryl |

(continued)

| Example | Comp. Ex. 1 | Comp. Ex. 2 | Comp. Ex. 3 | Comp. Ex. 4 | Ex. 1 | Ex. 2 |
|---|---|---|---|---|---|---|
| Acrylate ≠ b11 | - | 2-EHA | 2-EHA | 2-EHA | acrylate 1214 F | acrylate 1214 F |
| ak (20°C) [kJ/m$^2$] | 26.4 | 20.2 | 11.8 | 9.8 | 25.7 | 17.8 |
| ak (-10°C) [kJ/m$^2$] | 9.0 | 9.2 | 9.6 | 7.0 | 11.3 | 11.0 |

It was observed (cp. Table 1) that the impact strength at -10 °C can be improved when parts (5 or 15 wt.-%) of the butyl acrylate were replaced with lauryl acrylate (cp. Examples 1, 2). The impact strength at 20°C was nearly maintained by the acrylate change at low contents of acrylate b12 (cp. Example 1).

In case butyl acrylate is replaced with parts of 2-ethylhexyl acrylate such an improvement of the impact strength at -10°C cannot be observed (cp. Comp. Ex. 2).

Table 2: Thermoplastic molding compositions comprising one of graft copolymers B-1 or B-7 to B-11 and copolymer A and their impact strength at 20°C and -10 °C.

| Example | Comp. Ex.1* | Ex. 3 | Ex. 4 | Comp. Ex. 5 | Ex. 5 | Ex. 6 |
|---|---|---|---|---|---|---|
| A [wt.-%] | 65 | 65 | 65 | 65 | 65 | 65 |
| B-1 [wt.-%] | 35 | | | | | |
| B-7 [wt.-%] | | 35 | | | | |
| B-8 [wt.-%] | | | 35 | | | |
| B-9 [wt.-%] | | | | 35 | | |
| B-10 [wt.-%] | | | | | 35 | |
| B-11 [wt.-%] | | | | | | 35 |
| M (Acrylate ≠b11) [wt.-%] | 0 | 10 | 20 | 40 | 5 | 10 |
| Acrylate ≠b11 | - | 2-PHA | 2-PHA | 2-PHA | stearyl acrylate 1618 | stearyl acrylate 1618 |
| ak (20°C) [kJ/m$^2$] | 21.9 | 15.6 | 13.3 | 10.4 | 23.7 | 22.5 |
| ak (-10°C) [kJ/m$^2$] | 7.6 | 10.5 | 10.3 | 6.8 | 7.9 | 7.9 |
| *repeated test series | | | | | | |

It was observed (cp. Table 2) that the impact strength at -10°C can be significantly improved when parts of the butyl acrylate were replaced with 10 wt.-% or 20 wt.-% 2-propylheptyl acrylate (Examples 3 and 4). Furthermore it was observed that the impact strength at -10°C can be slightly improved when small amounts of stearyl acrylate (replacement of butyl acrylate by 5 wt.-% stearyl acrylate, cp. Examples 5) were used.

Table 3: Thermoplastic molding compositions comprising one of graft copolymers B-1, B-5 or B-12 and copolymer A and their impact strength at 20°C and -10 °C.

| Example | Comp.Ex.1** | Ex. 1** | Ex. 7 |
|---|---|---|---|
| A [wt.-%] | 65 | 65 | 65 |
| B-1 [wt.-%] | 35 | | |
| B-5 [wt.-%] | | 35 | |
| B-12 [wt.-%] | | | 35 |
| M (Acrylate ≠b11) [wt.-%] | 0 | 5 | 5 |
| Acrylate ≠b11 | - | lauryl acrylate 1214 F | 2-PHA |
| ak (20°C) [kJ/m$^2$] | 28.6 | 25.8 | 26.9 |

(continued)

| Example | Comp.Ex.1** | Ex. 1** | Ex. 7 |
|---|---|---|---|
| ak (-10°C) [kJ/m$^2$] | 5.4 | 6.9 | 10.0 |
| **repeated test series | | | |

The substitution of butyl acrylate with both 2-propylheptyl acrylate or lauryl acrylate showed an improved notched impact strength at -10 °C (cp. Table 3, Examples 1** and 7). The notched impact strength at 20°C was not altered significantly.

In summary, surprisingly, it was found that the substitution of butyl acrylate for acrylate species b12 by a mass fraction (M) of 20 wt.-% or less, in particular 5 wt.-%, leads to an improved notched impact strength at -10 °C of the copolymer product.

The notched impact strength at 20°C was not altered significantly when an acrylate b12 with a mass fraction (M) of 10 wt.-% or less was used in the reaction. When higher mass fractions of the acrylate b12 were used, the notched impact strength at 20°C was decreased.

## Claims

1.   Graft copolymer B composed of:

   B1: 55 to 65 wt.-%, related to the graft copolymer B, of at least one graft base B1, obtained by emulsion polymerization of:

   b11: 80 to 98.9 wt.-%, preferably 90 to 98.5 wt.-%, more preferably 92 to 98 wt.- %, most preferred 94 to 97 wt.-%, related to the graft base B1, of at least one C1 to C4-alkyl acrylate, preferably C2 to C4-alkyl acrylate, more preferably n-butyl acrylate as monomer b11;
   where monomer b11 can be replaced partially by less than 50 wt.-% - related to the total of monomers b11 - by at least one C5 to C8-alkyl acrylate, preferably 2-ethyl hexyl acrylate;
   b12: 1 to 19.9 wt.-%, preferably 1.35 to 10 wt.-%, more preferably 1.8 to 8 wt.- %, most preferred 2.6 to 6 wt.-%, related to the graft base B1, of at least one C9 to C22-alkyl(meth)acrylate, preferably C10 to C18-alkyl(meth)acrylate, more preferably C10 to C14-alkyl(meth)acrylate, as monomer b12; and
   b13: 0.1 to 10 wt.-%, preferably 0.15 to 5 wt.-%, more preferably 0.20 to 3.5 wt.- %, most preferred 0.4 to 2.5 wt.-%, related to the graft base B1, of at least one bi- or polyfunctional crosslinking monomer b13;
   where the sum of b11, b12 and b13 adds up to 100 wt.-%;

   B2: 35 to 45 wt.-%, related to the graft copolymer B, of at least one graft shell B2, which - in the presence of at least one graft base B1 - is obtained in one or more steps via emulsion polymerization of:

   b21: 50 to 95 wt.-%, preferred 60 to 90 wt.-%, more preferred 65 to 85 wt.-%, most preferred 70 to 85 wt.-%, related to the graft shell B2, of at least one vinylaromatic monomer b21, preferably styrene and alpha-methylstyrene, more preferably styrene, and
   b22: 5 to 50 wt.-%, preferred 10 to 40 wt.-%, more preferred 15 to 35 wt.-%, most preferred 15 to 30 wt.-%, related to the graft shell B2, of at least one vinylcyan monomer b22, preferably acrylonitrile and methacrylonitrile, more preferably acrylonitrile,
   where monomer b21 and/or monomer b22 can be replaced partially (less than 50 wt.-%, related to the total of monomers b21 and b22) by $C_1$-$C_4$-alkyl(meth)acrylates, N-phenyl maleimide, N-cyclohexyl maleimide and/or (meth)acrylamide;
   wherein the sum of b21 and b22 adds up to 100 wt.-%;

   wherein the sum of B1 and B2 adds up to 100 wt.-%.

2.   Graft copolymer B according to claim 1, wherein graft base B1, is obtained by emulsion polymerization of:

   b11: 90 to 98.5 wt.-%, preferably 92 to 98 wt.-%, more preferred 94 to 97 wt.-%, of at least one C2 to C4-alkyl acrylate, preferably n-butyl acrylate, as monomer b11;

b12: 1.35 to 10 wt.-%, preferably 1.8 to 8 wt.-%, more preferred 2.6 to 6 wt.-%, of at least one C9 to C22-alkylacrylate, as monomer b12; and

b13: 0.15 to 5 wt.-%, preferably 0.20 to 3.5 wt.-%, more preferred 0.4 to 2.5 wt.-%, of at least one bi- or polyfunctional crosslinking monomer b13.

3. Graft copolymer B according to claim 1 or 2, wherein
monomer b12 is at least one C10 to C18-alkylacrylate, preferably C10 to C16-alkylacrylate, more preferably C10 to C14-alkylacrylate, most preferably 2-propylheptyl acrylate, dodecyl acrylate and/or tetradecyl acrylate.

4. Graft copolymer B according to any of claims 1 to 3, wherein
monomer b13 is selected from allyl(meth)acrylate, divinylbenzene, diallylmaleate, diallylfumarate, diallylphthalate, triallylcyanurat, triallylisocyanurat and dihydrodicyclopentadienyl acrylate (DCPA).

5. Graft copolymer B according to any of claims 1 to 4 wherein graft shell B2 is composed of at least two, preferably two, graft layers B2-1 and B2-2 based on different graft monomer compositions.

6. Graft copolymer B according to any of claims 1 to 5 wherein graft shell B2 is composed of two graft shell layers B2-1 and B2-2 wherein graft shell layer B2-1 is made from a vinylaromatic monomer b21-1, and graft shell layer B2-2 is made from a mixture comprising vinylaromatic monomer b21-2 and vinylcyan monomer b22-2, wherein the amount of monomer b22-2 - related to the total of monomers b21-2 and b22-2 used for B2-2 - is 10 to 40 wt.-%, more preferably 15 to 35 wt.-%, most preferred 20 to 30 wt.-%.

7. Graft copolymer B according to any of claims 1 to 6, wherein vinylaromatic monomer b21 is styrene and vinylcyan monomer b22 is acrylonitrile.

8. Graft copolymer B according to any of claims 1 to 7, wherein monomer b11, monomer b21 and monomer b22 are not partially replaced.

9. Process for the preparation of graft copolymer B according to any of claims 1 to 8 by

   (i) first producing graft base B1 in presence of optionally a seed polymer latex (S-B1) by emulsion polymerization, by polymerizing monomer b11, monomer b12 and monomer b13 in an aqueous emulsion with a free-radical initiator at temperatures of from 30° to 120°C;
   (ii) in this resultant basic rubber latex (= graft base B1) then, in aqueous emulsion, in one or more steps producing graft shell B2 by polymerization of at least one vinylaromatic monomer b21 and vinyl cyan monomer b22.

10. Thermoplastic molding composition comprising a polymer mixture PM consisting of components A and B:

    (A) 30 to 85 wt.-%, preferably 40 to 80 wt.-%, more preferably 55 to 75 wt.-%, of at least one thermoplastic copolymer A comprising at least one vinylaromatic monomer, preferably styrene, A1, and at least one vinylcyan monomer, preferably acrylonitrile, A2;
    (B) 15 to 70 wt.-%, preferably 20 to 60 wt.-%, more preferably 25 to 45 wt.-%, of at least one graft copolymer B according to any of claims 1 to 8;

    where the sum of A and B adds up to 100 wt.-%.

11. Thermoplastic molding composition comprising:

    40 to 100 wt.-% of a polymer mixture PM consisting of components A and B according to claim 10;
    0 to 30 wt.-% of at least one further graft copolymer C - different from graft copolymer B - composed of an elastomeric, crosslinked acrylate polymer C1 (= graft base C1) and at least one graft shell C2, which is obtained via emulsion polymerization in the presence of at least one graft base C1, which graft shell C2 is made of a mixture comprising at least one vinyl aromatic monomer c21 and at least one vinylcyan monomer c22;
    0 to 20 wt.-% of additives and/or auxiliaries D; and
    0 to 50 wt.-% of at least one further thermoplastic polymer E selected from aromatic polycarbonates and polyamides;
    based in each case on the overall molding composition, and where the sum of PM, and optional components C, D and/or E adds up to 100 wt.-%.

12. Thermoplastic molding composition according to claim 10 or 11 wherein in thermoplastic copolymer A the proportion of the vinylcyan monomer A2, preferably acrylonitrile, is from 20 to 35% by weight, preferably 25 to 35 wt.-%.

13. Shaped articles produced from the thermoplastic molding composition according to any of claims 10 to 12 by extrusion, injection molding, blow molding or calendering.

14. Use of graft copolymers B according to claims 1 to 8 and of thermoplastic molding compositions according to claims 10 to 12 in the automotive industry, for building and construction, toys and leisure.

**Patentansprüche**

1. Pfropfcopolymer B gebildet aus:

B1: 55 bis 65 Gew.-%, bezogen auf das Pfropfcopolymer B, mindestens einer Pfropfgrundlage B1, erhalten durch Emulsionspolymerisation von:

b11: 80 bis 98,9 Gew.-%, bevorzugt 90 bis 98,5 Gew.-%, stärker bevorzugt 92 bis 98 Gew.-%, am meisten bevorzugt 94 bis 97 Gew.-%, bezogen auf die Pfropfgrundlage B1, mindestens eines C1- bis C4-Alkylacrylats, bevorzugt C2-bis C4-Alkylacrylats, stärker bevorzugt n-Butylacrylat, als Monomer b11;
wobei das Monomer b11 teilweise zu weniger als 50 Gew.-% - bezogen auf die Summe der Monomere b11 - durch mindestens ein C5- bis C8-Alkylacrylat, bevorzugt 2-Ethylhexylacrylat, ersetzt werden kann;
b12: 1 bis 19,9 Gew.-%, bevorzugt 1,35 bis 10 Gew.-%, stärker bevorzugt 1,8 bis 8 Gew.-%, am meisten bevorzugt 2,6 bis 6 Gew.-%, bezogen auf die Pfropfgrundlage B1, mindestens eines C9- bis C22-Alkyl(meth)acrylats, bevorzugt C10- bis C18-Alkyl(meth)acrylats, stärker bevorzugt C10- bis C14-Alkyl(meth)acrylats, als Monomer b12; und
b13: 0,1 bis 10 Gew.-%, bevorzugt 0,15 bis 5 Gew.-%, stärker bevorzugt 0,20 bis 3,5 Gew.-%, am meisten bevorzugt 0,4 bis 2,5 Gew.-%, bezogen auf die Pfropfgrundlage B1, mindestens eines bi- oder polyfunktionellen vernetzenden Monomers b13;
wobei die Summe aus b11, b12 und b13 100 Gew.-% ergibt;

B2: 35 bis 45 Gew.-%, bezogen auf das Pfropfcopolymer B, mindestens einer Pfropfschale B2, die - in Gegenwart mindestens einer Pfropfgrundlage B1 - in einem oder mehreren Schritten erhalten wird durch Emulsionspolymerisation von:

b21: 50 bis 95 Gew.-%, bevorzugt 60 bis 90 Gew.-%, stärker bevorzugt 65 bis 85 Gew.-%, am meisten bevorzugt 70 bis 85 Gew.-%, bezogen auf die Pfropfschale B2, mindestens eines vinylaromatischen Monomers b21, bevorzugt Styrol und alpha-Methylstyrol, stärker bevorzugt Styrol, und
b22: 5 bis 50 Gew.-%, bevorzugt 10 bis 40 Gew.-%, stärker bevorzugt 15 bis 35 Gew.-%, am meisten bevorzugt 15 bis 30 Gew.-%, bezogen auf die Pfropfschale B2, mindestens eines Vinylcyanmonomers b22, bevorzugt Acrylnitril und Methacrylnitril, stärker bevorzugt Acrylnitril,
wobei das Monomer b21 und/oder das Monomer b22 teilweise (zu weniger als 50 Gew.-%, bezogen auf die Summe der Monomere b21 und b22) durch $C_1$-$C_4$-Alkyl(meth)acrylate, N-Phenylmaleimid, N-Cyclohexylmaleimid und/oder (Meth)acrylamid ersetzt sein kann;
wobei die Summe von b21 und b22 100 Gew.-% ergibt;

wobei die Summe von B1 und B2 100 Gew.-% ergibt.

2. Pfropfcopolymer B nach Anspruch 1, wobei
die Pfropfgrundlage B1, erhalten wird durch Emulsionspolymerisation von:

b11: 90 bis 98,5 Gew.-%, bevorzugt 92 bis 98 Gew.-%, stärker bevorzugt 94 bis 97 Gew.-%, mindestens eines C2- bis C4-Alkylacrylats, bevorzugt n-Butylacrylat, als Monomer b11;
b12: 1,35 bis 10 Gew.-%, bevorzugt 1,8 bis 8 Gew.-%, stärker bevorzugt 2,6 bis 6 Gew.-%, mindestens eines C9- bis C22-Alkylacrylats, als Monomer b12; und
b13: 0,15 bis 5 Gew.-%, bevorzugt 0,20 bis 3,5 Gew.-%, stärker bevorzugt 0,4 bis 2,5 Gew.-%, mindestens eines bi- oder polyfunktionellen vernetzenden Monomers b13.

3. Pfropfcopolymer B nach Anspruch 1 oder 2, wobei
Monomer b12 mindestens ein C10- bis C18-Alkylacrylat, bevorzugt C10- bis C16-Alkylacrylat, stärker bevorzugt C10- bis C14-Alkylacrylat, am meisten bevorzugt 2-Propylheptylacrylat, Dodecylacrylat und/oder Tetradecylacrylat ist.

4. Pfropfcopolymer B nach einem der Ansprüche 1 bis 3, wobei
Monomer b13 ausgewählt ist aus Allyl(meth)acrylat, Divinylbenzol, Diallylmaleat, Diallylfumarat, Diallylphthalat, Triallylcyanurat, Triallylisocyanurat und Dihydrodicyclopentadienylacrylat (DCPA).

5. Pfropfcopolymer B nach einem der Ansprüche 1 bis 4, wobei die Pfropfschale B2 aus mindestens zwei, bevorzugt zwei, Pfropfschichten B2-1 und B2-2 auf Basis unterschiedlicher Pfropfmonomerzusammensetzungen gebildet ist.

6. Pfropfcopolymer B nach einem der Ansprüche 1 bis 5, wobei die Pfropfschale B2 aus zwei Pfropfschalenschichten B2-1 und B2-2 gebildet ist, wobei die Pfropfschalenschicht B2-1 aus einem vinylaromatischen Monomer b21-1 hergestellt ist und die Pfropfschalenschicht B2-2 aus einem Gemisch hergestellt ist, das das vinylaromatische Monomer b21-2 und das Vinylcyanmonomer b22-2 umfasst, wobei die Menge des Monomers b22-2 - bezogen auf die Gesamtmenge der für B2-2 verwendeten Monomere b21-2 und b22-2 - 10 bis 40 Gew.%, stärker bevorzugt 15 bis 35 Gew.-%, am meisten bevorzugt 20 bis 30 Gew.-%, beträgt.

7. Pfropfcopolymer B nach einem der Ansprüche 1 bis 6, wobei das vinylaromatische Monomer b21 Styrol ist und das Vinylcyanmonomer b22 Acrylnitril ist.

8. Pfropfcopolymer B nach einem der Ansprüche 1 bis 7, wobei das Monomer b11, das Monomer b21 und das Monomer b22 nicht teilweise ersetzt sind.

9. Verfahren zur Herstellung von Pfropfcopolymer B nach einem der Ansprüche 1 bis 8 durch

(i) zunächst Herstellen der Pfropfgrundlage B1 in Gegenwart gegebenenfalls eines Saatpolymerlatex (S-B1) durch Emulsionspolymerisation, indem das Monomer b11, das Monomer b12 und das Monomer b13 in einer wässrigen Emulsion mit einem radikalischen Initiator bei Temperaturen von 30° bis 120°C polymerisiert wird;
(ii) in diesem resultierenden Basis-Kautschuklatex (= Pfropfgrundlage B1) dann in wässriger Emulsion in einem oder mehreren Schritten Herstellen der Pfropfhülle B2 durch Polymerisation mindestens eines vinylaromatischen Monomers b21 und eines Vinylcyanmonomers b22.

10. Thermoplastische Formmasse aus einer Polymermischung PM, bestehend aus den Komponenten A und B:

(A) 30 bis 85 Gew.-%, bevorzugt 40 bis 80 Gew.-%, stärker bevorzugt 55 bis 75 Gew.- %, mindestens eines thermoplastischen Copolymers A, umfassend mindestens ein vinylaromatisches Monomer, bevorzugt Styrol, A1, und mindestens ein Vinylcyanmonomer, bevorzugt Acrylnitril, A2;
(B) 15 bis 70 Gew.-%, bevorzugt 20 bis 60 Gew.-%, stärker bevorzugt 25 bis 45 Gew.- %, mindestens eines Pfropfcopolymers B nach einem der Ansprüche 1 bis 8;

wobei die Summe von A und B 100 Gew.-% ergibt.

11. Thermoplastische Formmasse umfassend:

40 bis 100 Gew.-% einer Polymermischung PM bestehend aus den Komponenten A und B nach Anspruch 10;
0 bis 30 Gew.-% mindestens eines weiteren, vom Pfropfcopolymer B verschiedenen Pfropfcopolymers C, gebildet aus einem elastomeren, vernetzten Acrylatpolymer C1 (= Pfropfgrundlage C1) und mindestens einer Pfropfschale C2, die durch Emulsionspolymerisation in Gegenwart mindestens einer Pfropfgrundlage C1 erhalten wird, wobei die Pfropfschale C2 aus einer Mischung aus mindestens einem vinylaromatischen Monomer c21 und mindestens einem Vinylcyanmonomer c22 hergestellt ist;
0 bis 20 Gew.-% an Zusatz- und/oder Hilfsstoffen D; und
0 bis 50 Gew.-% mindestens eines weiteren thermoplastischen Polymers E, ausgewählt aus aromatischen Polycarbonaten und Polyamiden;
jeweils bezogen auf die gesamte Formmasse, wobei die Summe aus PM und den optionalen Komponenten C, D und/oder E 100 Gew.-% ergibt.

12. Thermoplastische Formmasse nach Anspruch 10 oder 11, wobei im thermoplastischen Copolymer A der Anteil des Vinylcyanmonomers A2, bevorzugt Acrylnitril, 20 bis 35 Gew.- %, bevorzugt 25 bis 35 Gew.-%, beträgt.

**13.** Formkörper, hergestellt aus der thermoplastischen Formmasse nach einem der Ansprüche 10 bis 12 durch Extrusion, Spritzgießen, Blasformen oder Kalandrieren.

**14.** Verwendung von Pfropfcopolymeren B nach den Ansprüchen 1 bis 8 und von thermoplastischen Formmassen nach den Ansprüchen 10 bis 12 in der Automobilindustrie, für Bauwesen und Konstruktion, Spielzeuge und Freizeit.

**Revendications**

**1.** Copolymère greffé B composé de :

B1 : 55 à 65 % en poids, par rapport au copolymère greffé B, d'au moins une base de greffage B1, obtenue par polymérisation en émulsion de :

b11 : 80 à 98,9 % en poids, préférablement 90 à 98,5 % en poids, plus préférablement 92 à 98 % en poids, le plus préférablement 94 à 97 % en poids, par rapport à la base de greffage B1, d'au moins un acrylate d'alkyle en C1 à C4, préférablement un acrylate d'alkyle en C2 à C4, plus préférablement l'acrylate de n-butyle en tant que monomère b11 ;
où le monomère b11 peut être remplacé partiellement à moins de 50 % en poids - par rapport au total des monomères b11 - par au moins un acrylate d'alkyle en C5 à C8, préférablement l'acrylate de 2-éthylhexyle ;
b12 : 1 à 19,9 % en poids, préférablement 1,35 à 10 % en poids, plus préférablement 1,8 à 8 % en poids, le plus préférablement 2,6 à 6 % en poids, par rapport à la base de greffage B1, d'au moins un (méth)acrylate d'alkyle en C9 à C22, préférablement un (méth)acrylate d'alkyle en C10 à C18, plus préférablement un (méth)acrylate d'alkyle en C10 à C14, en tant que monomère b12 ; et
b13 : 0,1 à 10 % en poids, préférablement 0,15 à 5 % en poids, plus préférablement 0,20 à 3,5 % en poids, le plus préférablement 0,4 à 2,5 % en poids, par rapport à la base de greffage B1, d'au moins un monomère de réticulation bifonctionnel ou polyfonctionnel b13 ;
où la somme de b11, b12 et b13 s'élève à 100 % en poids ;

B2 : 35 à 45 % en poids, par rapport au copolymère greffé B, d'au moins une enveloppe de greffage B2, qui - en la présence d'au moins une base de greffage B1 - est obtenue en une ou plusieurs étapes via polymérisation en émulsion de :

b21 : 50 à 95 % en poids, préférablement 60 à 90 % en poids, plus préférablement 65 à 85 % en poids, le plus préférablement 70 à 85 % en poids, par rapport à l'enveloppe de greffage B2, d'au moins un monomère vinylaromatique b21, préférablement le styrène et l'alpha-méthylstyrène, plus préférablement le styrène, et
b22 : 5 à 50 % en poids, préférablement 10 à 40 % en poids, plus préférablement 15 à 35 % en poids, le plus préférablement 15 à 30 % en poids, par rapport à l'enveloppe de greffage B2, d'au moins un monomère de cyanure de vinyle b22, préférablement l'acrylonitrile et
le méthacrylonitrile, plus préférablement l'acrylonitrile,
où le monomère b21 et/ou le monomère b22 peu(ven)t être remplacé(s) partiellement (moins de 50 % en poids, par rapport au total des monomères b21 et b22) par des (méth)acrylates d'alkyle en $C_1$-$C_4$, le N-phénylmaléimide, le N-cyclohexylmaléimide et/ou un (méth)acrylamide ;
la somme de b21 et b22 s'élevant à 100 % en poids ;
la somme de B1 et B2 s'élevant à 100 % en poids.

**2.** Copolymère greffé B selon la revendication 1,
une base de greffage B1, étant obtenue par polymérisation en émulsion de :

b11 : 90 à 98,5 % en poids, préférablement 92 à 98 % en poids, plus préférablement 94 à 97 % en poids, d'au moins un acrylate d'alkyle en C2 à C4, préférablement l'acrylate de n-butyle, en tant que monomère b11 ;
b12 : 1,35 à 10 % en poids, préférablement 1,8 à 8 % en poids, plus préférablement 2,6 à 6 % en poids, d'au moins un acrylate d'alkyle en C9 à C22, en tant que monomère b12 ; et
b13 : 0,15 à 5 % en poids, préférablement 0,20 à 3,5 % en poids, plus préférablement 0,4 à 2,5 % en poids, d'au moins un monomère de réticulation bifonctionnel ou polyfonctionnel b13.

3. Copolymère greffé B selon la revendication 1 ou 2, un monomère b12 étant au moins un acrylate d'alkyle en C10 à C18, préférablement un acrylate d'alkyle en C10 à C16, plus préférablement un acrylate d'alkyle en C10 à C14, le plus préférablement l'acrylate de 2-propylheptyle, l'acrylate de dodécyle et/ou l'acrylate de tétradécyle.

4. Copolymère greffé B selon l'une quelconque des revendications 1 à 3, un monomère b13 étant choisi parmi un (méth) acrylate d'allyle, un divinylbenzène, le maléate de diallyle, le fumarate de diallyle, le phtalate de diallyle, le cyanurate de triallyle, l'isocyanurate de triallyle et l'acrylate de dihydrodicyclopentadiényle (DCPA).

5. Copolymère greffé B selon l'une quelconque des revendications 1 à 4, une enveloppe de greffage B2 étant composée d'au moins deux, préférablement deux, couches de greffage B2-1 et B2-2 basées sur des compositions de monomères de greffage différentes.

6. Copolymère greffé B selon l'une quelconque des revendications 1 à 5, une enveloppe de greffage B2 étant composée de deux couches d'enveloppe de greffage B2-1 et B2-2, la couche d'enveloppe de greffage B2-1 étant composée d'un monomère vinylaromatique b21-1, et la couche d'enveloppe de greffage B2-2 étant composée d'un mélange comprenant un monomère vinylaromatique b21-2 et un monomère de cyanure de vinyle b22-2, la quantité de monomère b22-2 - par rapport au total des monomères b21-2 et b22-2 utilisés pour B2-2 - étant de 10 à 40 % en poids, plus préférablement de 15 à 35 % en poids, le plus préférablement de 20 à 30 % en poids.

7. Copolymère greffé B selon l'une quelconque des revendications 1 à 6, un monomère vinylaromatique b21 étant le styrène et un monomère de cyanure de vinyle b22 étant l'acrylonitrile.

8. Copolymère greffé B selon l'une quelconque des revendications 1 à 7, un monomère b11, un monomère b21 et un monomère b22 n'étant pas partiellement remplacés.

9. Procédé pour la préparation d'un copolymère greffé B selon l'une quelconque des revendications 1 à 8

   (i) d'abord en produisant une base de greffage B1 en présence d'éventuellement un latex de polymère d'ensemencement (S-B1) par polymérisation en émulsion, en polymérisant un monomère b11, un monomère b12 et un monomère b13 dans une émulsion aqueuse avec un initiateur de radicaux libres à des températures allant de 30° à 120 °C ;
   (ii) dans ce latex de caoutchouc basique résultant (= base de greffage B1) ensuite, en émulsion aqueuse, en une ou plusieurs étapes, en produisant une enveloppe de greffage B2 par polymérisation d'au moins un monomère vinylaromatique b21 et un monomère de cyanure de vinyle b22.

10. Composition de moulage thermoplastique comprenant un mélange de polymères PM constitué de composants A et B :

   (A) 30 à 85 % en poids, préférablement 40 à 80 % en poids, plus préférablement 55 à 75 % en poids, d'au moins un copolymère thermoplastique A comprenant au moins un monomère vinylaromatique, préférablement le styrène, A1, et d'au moins un monomère de cyanure de vinyle, préférablement l'acrylonitrile, A2 ;
   (B) 15 à 70 % en poids, préférablement 20 à 60 % en poids, plus préférablement 25 à 45 % en poids, d'au moins un copolymère greffé B selon l'une quelconque des revendications 1 à 8 ;

   où la somme de A et B s'élève à 100 % en poids.

11. Composition de moulage thermoplastique comprenant : 40 à 100 % en poids d'un mélange de polymères PM constitué de composants A et B selon la revendication 10 :

   0 à 30 % en poids d'au moins un copolymère greffé supplémentaire C - différent du copolymère greffé B - composé d'un polymère d'acrylate élastomérique, réticulé C1 (= base de greffage C1) et d'au moins une enveloppe de greffage C2, qui est obtenue via polymérisation en émulsion en la présence d'au moins une base greffage C1, laquelle enveloppe de greffage C2 étant composée d'un mélange comprenant au moins un monomère vinylaromatique c21 et au moins un monomère de cyanure de vinyle c22 ;
   0 à 20 % en poids d'additifs et/ou d'auxiliaires D ; et
   0 à 50 % en poids d'au moins un polymère thermoplastique supplémentaire E choisi parmi des polycarbonates et polyamides aromatiques ;
   sur la base en chaque cas de la composition de moulage globale, et où la somme de PM, et de composants éventuels C, D et/ou E s'élève à 100 % en poids.

12. Composition de moulage thermoplastique selon la revendication 10 ou 11, dans le copolymère thermoplastique A la proportion du monomère de cyanure de vinyle A2, préférablement l'acrylonitrile, étant de 20 à 35 % en poids, préférablement 25 à 35 % en poids.

13. Articles façonnés produits à partir de la composition de moulage thermoplastique selon l'une quelconque des revendications 10 à 12 par extrusion, moulage par injection, moulage par soufflage ou calandrage.

14. Utilisation de copolymères greffés B selon les revendications 1 à 8 et de compositions de moulage thermoplastique selon les revendications 10 à 12 dans l'industrie automobile, pour le bâtiment et la construction, les jouets et les loisirs.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006132796 A
- KR 20120054163 A
- KR 20130078379 A
- KR 20130078199 A
- WO 2012038441 A
- DE 4005210
- EP 0657480 A
- DE 4342048
- EP 0725091 A
- EP 3406641 A
- US 2520959 A
- US 20110275763 A
- US 20160297957 A
- WO 0130901 A
- WO 0228931 A
- EP 1191044 A
- EP 1305345 A
- EP 029613 A
- EP 007810 A
- DE 1233131 A
- DE 1258076 A
- DE 2101650 A
- DE 3149358 A
- DE 3227555 A
- EP 0006503 A
- US 20160297957 A1
- DE 1300266 B
- DE 1495730 A
- EP 38094 A
- EP 38582 A
- EP 39524 A
- EP 129195 A
- EP 129196 A
- EP 0993476 B

### Non-patent literature cited in the description

- Polystyrol, Polystyrene. **VIEWEG-DAUMILLER**. Kunststoff-Handbuch (Plastics Handbook. Carl-Hanser-Verlag, 1969, vol. V, 124
- Ullmanns Encyclopedia of Industrial Chemisty. Wiley, 2011
- Methoden der organischen Chemie" [Methods of Organic Chemistry. **HOUBEN-WEYL**. Makromolekulare Stoffe [Macromolecular materials. Georg-Thieme-Verlag, 1961, vol. 14-1, 411-420
- Methoden der organischen Chemie. **HOUBEN-WEYL**. Makromolekulare Stoffe. Georg-Thieme-Verlag, 1961, vol. 14-1, 192-208
- **HOUBEN-WEYL**. Methoden der organischen Chemie, vol. E 20, 2168
- Encyclopedia of Polymers, vol. 11, 315